(19) Europäisches Patentamt
European Patent Office
Office européen des brevets

(11) **EP 1 560 473 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
***H05B 41/292*** *(2006.01)*

(21) Anmeldenummer: **04030344.8**

(22) Anmeldetag: **21.12.2004**

(54) **Betriebsverfahren, elektronisches Vorschaltgerät und System für den Resonanzbetrieb von Hochdrucklampen im longitudinalen Mode**

Method and apparatus for operating high pressure lamps in the longitudinal resonant mode

Méthode et dispositif pour alimenter des lampes à haute pression en mode de résonance longitudinal

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.01.2004 DE 102004004829**

(43) Veröffentlichungstag der Anmeldung:
**03.08.2005 Patentblatt 2005/31**

(73) Patentinhaber: **OSRAM Gesellschaft mit beschränkter Haftung
81543 München (DE)**

(72) Erfinder: **Stockwald, Klaus, Dr.
82110 Germering (DE)**

(56) Entgegenhaltungen:
**EP-A- 0 785 702        WO-A-00/79841
US-A1- 2002 041 165    US-B1- 6 400 100**

## Beschreibung

### Technisches Gebiet

Diese Anmeldung steht in engem Zusammenhang mit der parallel eingereichten DE-Az 10 2004 004 828.2, auf die hiermit ausdrücklich bezog genommen wird.

Die Erfindung betrifft ein Betriebsverfahren, elektronisches Vorschaltgerät und System für den Resonanzbetrieb von Hochdrucklampen im longitudinalen Mode gemäß dem Oberbegriff des Anspruchs 1. Es handelt sich dabei insbesondere um Hochdruckentladungslampen mit keramischem Entladungsgefäß, bevorzugt mit einem Aspektverhältnis von mindestens 1,5.

### Stand der Technik

Aus der US 6 400 100 ist bereits ein Betriebsverfahren, elektronisches Vorschaltgerät und System für den Resonanzbetrieb von Hochdrucklampen im longitudinalen Mode bekannt. Dort wird ein Verfahren zum Auffinden der zweiten longitudinalen akustischen Resonanzfrequenz angegeben. Es geht davon aus, dass beim kontinuierlichen Abfahren des den longitudinalen Modus enthaltenden Frequenzbereichs durch ein Auftreten einer relativen Brennspannungserhöhung der Lampe die Resonanzfrequenz in vertikaler Brennlage gefunden werden kann. Es zeigt sich, dass mit dieser Methode die longitudinale Frequenz für einen segregierten, also entmischten Zustand des im Entladungsgefäß befindlichen Plasmas in vertikaler Resonanz gefunden und dann beibehalten wird. Diese so gefundene Frequenz kann aber je nach Füllungszusammensetzung der Metallhalogenidfüllung und Zeitpunkt des Ablaufes der Suchprozedur deutlich zu hoch angesiedelt sein, so dass ein Anregen der akustischen Resonanz bei der mit o.g. Methode gefundenen Frequenz eine unzureichende Durchmischung ergibt und die Segregation, also Entmischung des Plasmas, nicht genügend gut aufhebt. Die Implementierung des Betriebsverfahrens in geeignete Komponenten eines elektronisches Vorschaltgeräts ist außerdem aufwendig.

### Darstellung der Erfindung

Es ist eine Aufgabe der vorliegenden Erfindung, ein Betriebsverfahren für eine Metallhalogenidlampe gemäß dem Oberbegriff des Anspruchs 1 bereitzustellen, das eine optimale Durchmischung in unterschiedlicher Brennlage der Lampe sicherstellt.

Der Erfindung liegt die weitere Aufgabe zugrunde, eine Metallhalogenidlampe mit hoher Farbwiedergabe und erhöhter Lichtausbeute so zu betreiben, dass ihre Brennlage keiner Einschränkung unterliegt. Es soll sich allenfalls ein geringer Unterschied der Betriebsdaten zwischen horizontaler und vertikaler Brennlage ergeben. Eine weitere Aufgabe ist es, ein elektronisches Vorschaltgerät bereitzustellen, das eine möglichst automatisierte Prozedur durchführt, um über Aufprägen einer geeigneten Amplitudenmodulation mit AM-Grad AMI in der Nähe einer longitudinalen akustischen Resonanz für unterschiedliche Brennlagen annähernd gleiche Farbwiedergabe und Lichtausbeute zu erzielen.

Eine weitere Aufgabe ist es, eine gesuchte akustische Resonanz, bevorzugt die zweite longitudinale, in jeder Brennlage zuverlässig zu finden. Eine weitere Aufgabe ist es, ein zugehöriges System dafür anzugeben. Eine weitere Aufgabe ist, während des Betriebes von hocheffizienten Hochdrucklampen eine optimale Resonanzfrequenzeinstellung für eine Mischung des Metallhalogenidplasmas zu bestimmen und einzustellen. Eine weitere Aufgabe ist, einen Algorithmus anzugeben, mit dem während des Lampenbetriebes ein Vorschaltgerät die für die Mischung des Metallhalogenidplasmas optimale Frequenzeinstellung der mischenden akustischen Resonanz bestimmt und reproduzierbar einstellt.

Die Aufgabe des Betriebsverfahrens wird durch die kennzeichnenden Merkmale des Anspruchs 1 gelöst. Besonders vorteilhafte Ausgestaltungen finden sich in den abhängigen Ansprüchen. Außerdem wird ein elektronischen Vorschaltgerät, das dieses Verfahren anwendet, angegeben.

Gewisse Fertigungstoleranzen sowie die über längere Betriebsperioden von keramischen Metallhalogenidlampen unvermeidlich auftretenden Änderungen der Innenlänge sowie geringfügige Änderungen der Schallgeschwindigkeiten des Lampenplasmas, beispielsweise aufgrund Schwankungen der Umgebungstemperatur und Änderungen in der Füllungszusammensetzung, verursachen langfristig, aber auch kurzfristig, immer wieder Änderungen der Resonanzfrequenz im Entladungsgefäß. Dies erfordert eine ständige Nachregelung des Abstimmkriteriums, um exakt die gewünschte Frequenz oder den gewünschten Frequenzbereich einzustellen, die einen positiven Effekt einer Durchmischung mit Hilfe der longitudinalen akustischen Resonanz zeigt.

Das erfindungsgemäße Betriebsverfahren ist darauf ausgerichtet, von vornherein immer eine bestimmte Frequenz, bevorzugt in der Nähe der zweiten longitudinalen Resonanz der horizontalen Brennlage, im Dauerbetrieb anzuregen, weil sich damit eine optimale Durchmischung der Füllungsbestandteile, vor allem der Metallhalogenide, auch in nichthorizontaler Brennlage erreichen lässt. Somit werden Farbeffekte und Farbstreuung weitgehend vermieden. Diese Frequenz muss verzögert nach Einhalten einer gewissen Karenzzeit dem System aufgeprägt werden. Diese Vorgehensweise ermöglicht ein zuverlässiges Einschwingen in der Nähe der optimalen Resonanz, insbesondere der zweiten longitudinalen akustischen Resonanz f002 der horizontalen Brennlage. Das Verfahren ist vor allem bei keramischen Hochdrucklampen geeignet mit einem Aspekt-Verhältnis (Länge:Durchmesser) von mindestens 1.5, bevorzugt ≥ 2 (typisch 3 bis 6). Es verwendet einen HF-Sweep-Betrieb, wodurch die Segregation unterdrückt wird und die Durchmischung des Metallhalogenid-Lichtbogen-Plasmas verbessert wird.

Es zeigt sich, dass die beste Durchmischung erfolgt, wenn auch in nichthorizontaler, insbesondere sogar in vertikaler, Position in der Aufwärmphase der Lampe zunächst bei annähernd gleichen Resonanzbedingungen angeregt wird wie im Falle der gleichartigen Resonanz in horizontaler Brennlage. In der Horizontalen tritt aufgrund anderer Konvektionsbedingungen nahezu keine Segregation auf.

Es wird erfindungsgemäß ein verbessertes, gegenüber WO 02/09480 bzw. US 6 400 100 zuverlässigeres Verfahren vorgeschlagen, das einfacher und billiger in elektronischen Vorschaltgeräten (EVG) realisiert werden kann.

Die Lage der Resonanz f002 in horizontaler Brennlage wird für eine individuelle Lampe als erstes ermittelt. Dies kann durch verschiedene Verfahren vorab einmalig oder immer wieder on-line im Betrieb der Lampe erfolgen, z. B. durch Messung der Lampen-Impedanz im Betrieb mit Rechteckstrom-Einprägung und überlagertem sinusförmigen Signal, wobei beispielsweise die Amplitude des sinusförmigen Anteils etwa 5-15 % der Stromamplitude bei Variation der Frequenz des Sinus-Signals betragen soll.

Für ein zuverlässiges Funktionieren des Verfahrens ist es wünschenswert, dass für eine vorgegebene Geometrie des Entladungsgefäßes ein enger Toleranzbereich für die Innenlänge IL von typisch ≤ 1 % x IL vorliegt. Die Innenlänge stellt diejenige Dimension der Lampe dar, die die zweite longitudinale akustische Resonanz definiert, welche für eine optimale Durchmischung des Bogenplasmas, insbesondere bei vertikaler Brennlage, angeregt werden muss. Bevorzugt ist die Geometrie zylindrisch mit geraden oder abgeschrägten Enden, aber auch bauchige Gefäße sind geeignet. In derartigen Fällen kann statt einer geometrisch ermittelten Innenlänge eine effektive Innenlänge angenommen werden.

In vertikaler Brennlage ergeben sich aufgrund der damit verstärkt verbundenen Entmischung der Füllungsbestandteile stark veränderte Schallgeschwindigkeiten, die dazu führen, dass nach dem Anlaufen der Lampe die Frequenz der akustischen zweiten longitudinalen Resonanz (f002_vert) gegenüber der Frequenz bei horizontaler Brennlage, abgekürzt als f002_hor, deutlich verschoben ist, und zwar meist zu höheren Frequenzen hin. Im Laufe der Zeit ändert sich dann bei erfindungsgemäßer Betriebsweise, die eine allmähliche Durchmischung erreicht, diese Resonanzfrequenz, bis sie wieder annähernd derjenigen bei horizontalem Betrieb, also f002_hor, entspricht.

Dabei zeigen sich aufgrund der vor allem bei vertikalem Betrieb auftretenden Segregation Abweichungen der effektiven Schallgeschwindigkeit bis zu 30 %, meist von ca. 10 bis 25 %, zu höheren Werten hin, verglichen mit dem durchmischten Zustand in horizontaler Brennlage. Beispielsweise werden Abweichungen der effektiven Schallgeschwindigkeiten bei Hg/Ar-Puffergasgemischen von ca. 15 bis 20 % gegenüber dem durchmischten Betrieb gefunden. Ein konkreter Messwert lag z.B. bei 550 m/s gegenüber 464 m/s.

Die akustische Resonanzfrequenz der i-ten longitudinalen akustischen Resonanz ist in einem Entladungsgefäß der Innenlänge IL allgemein gegeben durch das Produkt:

$$f00i = i * cl /(2*IL) \; ;$$

für i = 2 (zweite akustische Resonanz) gilt also:: f002 = cl / IL.

Dabei ist cl die effektive (longitudinal wirksame) Schallgeschwindigkeit cl, wobei gilt

$$cl = (R*\kappa*T/M)1/2$$

mit R: allg. Gaskonstante, κ: Kompressibilität, T: mittlere Plasma-Temperatur, M: mittlere molare Masse des Plasma-Gases; IL = effektive axiale Länge des Entladungsgefäßes).

Für azimutale akustische Resonanzen gilt der Zusammenhang zwischen Röhrenradius R und einer effektiven (azimutal wirksamen) Schallgeschwindigkeit $c_{az}$ :

$$fi00 = a_{i0} \, c_{az} /(2*\pi*R) \text{ , mit } a_{i0} \text{ für i = 1,2,... = Besselkoeffizient: } a_{10} = 1.84 \; ; \; a_{20} = 3.05$$
$$; \; a_{30} = 4.2 \text{ usw.}$$

Für die radialen akustischen Resonanzen gilt der Zusammenhang zum Röhrenradius R und einer effektiven radial wirksamen Schallgeschwindigkeit cr :

$$f0i0 = a_{0i} \; c_r \; /(2{*}\pi{*}R) \; ; \; \text{mit } a_{0i} \text{ für } i = 1,2,\ldots = \text{Besselkoeffizient: } a_{01} = 3.83 \; ; \; a_{02} = 7.016; \; \text{usw.}$$

Zur Anregung dieser Schallresonanzen im geschlossenen , annähernd zylindrischen Lampenkolben sind die sich ausbildenden elektrischen Leistungsschwingungen maßgeblich. Das heißt, bei Anregung mit sinusförmigen Stromformen mit der Frequenz fl hat die Leistungsfrequenz fP die Frequenz: fP = 2* fl.

Die Erfindung geht grundsätzlich aus von einer elektrischen Trägerfrequenz v im für Lampenanwendungen typischen HF-Bereich, beispielsweise v = 50 kHz, der eine Sweepfrequenz fFM als Frequenzmodulation aufgeprägt ist, deren Wert ausgewählt ist aus einem Bereich, der sich von der ersten azimutalen bis zur ersten radialen Resonanz erstreckt. Bevorzugt ist insbesondere ein Wert für fFM, der in der Nähe des Mittelwertes, insbesondere direkt beim Mittelwert, zwischen beiden Resonanzen liegt. Ein Anhaltspunkt ist ein Sweepen, das um bis zu 10 % von der Trägerfrequenz abweicht. Die Sweeprate liegt typisch im Bereich von 100 bis 1000 s-1.

Der Sweep-Betrieb vorzugsweise rampenförmig mit an- oder absteigender Frequenz ausgeführt.

Diese Betriebsart nutzt den Effekt der Bogenstabilisierung auf die zentrale Achse des Entladungsgefäßes in vertikaler sowie auch in horizontaler Brennlage durch Anregung von zentrierenden Gasschwingungen um den Bogenkern.

Dieser grundsätzlichen Stromsignalform wird, evtl. nach Einhalten einer Karenzzeit (Aufwärmen der Lampe), außerdem eine Amplitudenmodulation AM aufgeprägt, deren Grundfrequenz die zweite longitudinale Resonanz f002hor in horizontaler Brennlage ist. diese Grundfrequenz ist die Ausgangsbasis der Regelung.

Es zeigt sich, dass im vertikalen Betrieb die Resonanzfrequenzen bei den hier benutzten Innendimensionen des Entladungsgefäßes — ein typischer Wert ist 12 bis 24 mm -- um bis zu 5 kHz gegenüber der horizontalen bzw. durchmischten Bedingung verschoben sind. Die hier beschriebene Vorgehensweise führt zuverlässig zur gewünschten Betriebsweise.

Mehrere Ausführungsformen eignen sich als Lösungswege zur zuverlässigen Einstellung einer bestmöglichen Durchmischung des Lichtbogenplasmas und einer weitgehenden Aufhebung der Segregation. Mehrere Betriebsverfahren zur Einstellung einer AM für die eine Durchmischung am besten bewirkende zweite horizontale longitudinale Resonanz f002 in beliebiger Brennlage, bevorzugt bei einer FM im Sweep-Betrieb bei oder im Bereich eines Wertes von ca. 0,9 bis 1,1 x (f100+ f010)/2, werden hier im weiteren angegeben. Dieser Sweepbereich von 10 % fSW entspricht in etwa einem Fenster von 5 kHz nach oben und unten. Die Frequenz fSW kann im Bereich der ersten azimutalen und radialen Resonanz f100 und f010 gewählt werden, bevorzugt in der Nähe deren Mittelwerts mit einer Abweichung bis zu 10 %, also 10% x (f100+ f010)/2 ).

Voraussetzung für ein Verfahren zur Einstellung der AM-Frequenz für optimale Durchmischung des Bogenplasmas in jeder Brennlage ist zunächst die Bestimmung und Speicherung der Lage der zweiten longitudinalen Resonanzfrequenz f002 in praktisch immer schon durchmischter horizontaler Brennlage. Zur Einstellung eines Grundbetriebes mit dieser Frequenz muss bei jeder Lampe zunächst individuell die dort vorliegende Geometrie des Entladungsgefäßes und Zusammensetzung des Puffergases auf die akustischen Resonanzen hin charakterisiert und untersucht werden, so dass neben der zweiten longitudinalen Resonanzfrequenz f002 auch die erste azimutale Resonanzfrequenz f100 und die erste radiale Resonanzfrequenz f010 bekannt sind. Außerdem wird daraus der mittelwert der beiden Frequenzen (f100+ f010)/2 berechnet und gespeichert.

In einer ersten Ausführungsform lässt sich eine Prozedur zum Einschwingen in den günstigsten durchmischten Betriebszustand dadurch realisieren, dass nach dem Zünden der Bogenentladung, unter Einhaltung einer Aufwärmphase (Karenzzeit bis Zeitpunkt t1) von ca. 30 bis 80 sec, bevorzugt etwa 60 sec, innerhalb einer Prägungsphase von ca. 60 bis 150 sec, die Grundfrequenz fAM der Amplitudenmodulation AM auf einen Wert vom 1,15 bis 1,25-fachen der Frequenz f002_hor eingestellt wird. Davor kann die AM-Frequenz beliebig gewählt sein, bevorzugt ist aber f002_hor voreingestellt. Auch der AM-Grad kann zuvor beliebig in einem Bereich von 0 bis 25 % eingestellt sein. Zum Zeitpunkt der Erhöhung der Grundfrequenz fAM in der Prägungsphase, bevorzugt ist dabei eine um 18-20% erhöhte Frequenz gegenüber f002_hor eingestellt, wird der AM-Grad auf 15 bis 30 % eingestellt. Bevorzugt wird dabei die Amplitudenmodulation auf ca. 15-25% Amplitudenmodulationsgrad eingestellt.

Die grundsätzliche Lösung besteht im geregelten Erkennen des optimalen Frequenzpunktes fopt der AM und des passenden Signalpegels AMI des AM-Grades für die Durchmischung des Metallhalogenidplasmas einer mittels akustischer longitudinaler Resonanzen gesteuerten Metallhalogenidentladungslampe sowie der Bereitstellung eines elektronischen Vorschaltgeräts zum Betrieb im optimal gemischtem Modus.

Es zeigt sich , dass -- ausgehend von höheren Frequenzen, beispielsweise 1,25 x f002hor, und hin zu niedrigeren Frequenzen -- beim sukzessiven Überstreichen des Frequenzbereiches ΔF der AM-Frequenz fAM, in dem eine Durchmischung des segregierten, wenig durchmischten Metallhalogenidplasmas erreicht werden kann, sich ein charakteristisches Verhalten der Lampenimpedanz Z ausbildet, indem eine lokale Überhöhung von Z auftritt.

Der AM-Grad ist ein Maß für die jeweilige elektrische Leistung, bezogen auf die Gesamtleistung, die in die Anregung von longitudinalen Resonanzen umgesetzt wird.

Wird der AM-Grad schrittweise erhöht, z. B. in Schritten von ca. 2.5 %, so erhält man jeweils bei gegebenem AM-Grad beim Durchfahren des Frequenzbereiches ΔF ein charakteristisches Verhalten der Lampen-Impedanz.

Das Verhalten der Lampenimpedanz Z(fAM) in Abhängigkeit von der Frequenz fAM über den Frequenzbereich ΔF wird als Funktion des AM-Grads aufgenommen und als Kennlinienfeld gespeichert. Es zeigen sich dabei mit Zunahme des AM-Grads zunächst ein und dann zwei, u.U sogar mehrere als Funktion von fAM aufeinanderfolgende dynamische Extrema der Lampenimpedanz, die sich im Verlauf der schrittweisen Erhöhung des AM-Grades charakteristisch ausbilden und verschieben.

Als Betriebsparameter kann insbesondere anstelle des Amplitudenmodulationsgrads auch der Leistungs-Signalpegel einer die Durchmischung der Metallhalogenide enthaltenden Entladung steuernden Signalfrequenz dienen, beispielsweise der Signalpegel einer linearen Überlagerung , die eine gemischte longitudinal-azimutale Resonanz hervorruft, die eine ähnliche verstärkte Durchmischung des Bogen-Plasmas hervorruft wie die zweite longitudinale Resonanz.

Das Verfahren ist in mehrere Schritte gegliedert und besteht aus mindestens zwei Schritten.

Der erste Schritt ist ein sukzessives Abfahren (Scannen) eines relativ großen Frequenzintervalls der Amplitudenmodulation (fAM). Der Scanbereich liegt zwischen einem oberen Startpunkt ST und einem unteren Endpunkt SP, so dass die Frequenz des Frequenzstartpunkts ST über dem Endpunkt SP liegt.

Zuvor wird aber in einem Vorbereitungsschritt der Frequenzbereich, innerhalb dessen eine Mischung der Metallhalogenide, erkennbar an einem Maximum der Lampenimpedanz, überhaupt auftritt, grob bestimmt. Dessen Endpunkte werden als FM1 (oberer Endpunkt des mischenden Frequenzbereiches) und FM2 (unterer Endpunkt des mischenden Frequenzbereiches) bezeichnet, wobei Frequenzstartpunkt ST und Frequenzendpunkt SP jeweils außerhalb des mischenden Frequenzbereiches liegen. Es ist also für diese Frequenzen die Bedingung ST > FM1 > FM2 > SP zu erfüllen.

Das Auffinden des mischenden Frequenzbereiches als Vorstufe des ersten Schritts kann beispielsweise über ein grobes Scannen mit einem geringen Signallevel der AM (AMI = 5-10%) vorab aktuell bestimmt werden.

In einer anderen Ausführungsform ist dieses Frequenzintervall [ST,SP] für eine Geometrie mit gegebenem Innendurchmesser ID und gegebener Innenlänge IL und einer gegebenen Metallhalogenidfüllung bereits einmal grundsätzlich bestimmt und im zugehörigen elektronischen Vorschaltgerät gespeichert.

Danach erfolgt die Festlegung der Intervallbreite für den ersten Schritt. Typisch sollten sowohl ST als auch SP jeweils bevorzugt mindestens 10 -15% außerhalb des von FM1 und FM2 aufgespannten Fensters liegen (ST ≥ 1.10*FM1; SP ≤ 0.9*FM2). Der gewünschte Wert kann im Lampensystem, bestehend aus Lampe und elektronischem Vorschaltgerät, vorprogrammiert sein oder als Eingabebefehl angegeben werden.

Eine typische Intervallbreite des Scanbereichs ST-SP für den ersten Schritt ist etwa 8-15 kHz.

Bei einem konkreten Ausführungsbeispiel hat das Entladungsgefäß der Lampe ein Innenmaß von 19 mm Länge und einen Innendurchmesser von 4 mm, das Puffergas ist ein Gemisch Hg-Argon. Hier liegt die optimal mischende Resonanzfrequenz fAM zwischen 22 und 25 kHz. FM1 ist somit 25 kHz und FM2 ist 22 kHz. Hier kann das Intervall von ST = 30 kHz abwärts nach SP = 20 kHz abgefahren werden.

Die Richtung des Frequenz-Scans von der höheren ST zur niedrigeren Endfrequenz SP ergibt sich aus dem Befund, dass sich die akustischen Resonanzen, insbesondere bei Vertikalbetrieb, im segregierten Zustand bei kontinuierlicher Anwendung von Amplitudenmodulation systematisch zu höheren Frequenzen hin verschieben. Dieses Verhalten steht in Gegensatz zur Lehre der US-PS 6 400 100. Weiterhin wurde gefunden, dass durch ein hinreichend langsames zeitlich konstantes Verschieben, insbesondere einer Verschiebungsrate von typisch 0.05-1 kHz/sec, der Anregungsfrequenz fAM des durchmischenden akustischen Frequenzsignals bei hinreichender Signalhöhe mit einem AM-Grad von typisch 10-40 % eine immer bessere Durchmischung des Lampenplasmas erzielt wird und damit die Resonanzfrequenz f002 zu geringeren Frequenzen hin, in Richtung f002hor, verschoben wird.

Ein hervorragend geeigneter Parameter zur Überwachung dieses Sachverhalts ist die mittlere Lampenimpedanz Z = Urms/Irms, wie sie bei zeitlich konstanter Verschiebung von fAM auftritt (rms = root mean square).

Eine vollständige Charakterisierung von Z als Funktion der Zeit ist für die optimale Einstellung nicht notwendig. Es genügt als Mindestanforderung eine Messung in der gewünschten Brennlage, insbesondere vertikal, wobei ein einmaliges vollständiges Überfahren des Frequenzbereiches FM genügt und zwar zwischen den Grenzen FM1 und FM2, in denen die Durchmischung auftritt. Bevorzugt wird zur Sicherheit ein größeres Frequenzfenster zwischen dem Frequenzstartpunkt ST und dem Frequenzendpunkt SP gewählt, weil am Endpunkt SP keine wesentliche Plasmadurchmischung, bzw. am oberen Frequenzpunkt ST allenfalls eine geringe Plasmadurchmischung vorliegt.

Die beschriebene Prozedur nutzt die mit fortschreitender Frequenzverschiebung allmählich verbesserte Durchmischung der Metallhalogenide im Plasma, um charakteristische Frequenzen, also insbesondere die Resonanzfrequenz f002, für den Mischungsvorgang zu ermitteln. Es zeigt sich, dass bevorzugt eine konstante Rate der Frequenzverschiebung (Frequenz-Scan) gewählt werden sollte, wobei sich dafür eine optimale Geschwindigkeit in der Größenordnung von 0,1 bis 0,5 kHz/sec finden lässt, die dem normalen Lampenbetrieb gerecht wird. Außerdem empfiehlt sich, dass die Prozedur erst nach einer Aufwärmbetriebsphase von ca. 1 - 3 min angewandt wird.

Je nach Leistung der Entladungslampe kann sich mit der Verbesserung der Gasdurchmischung auch das geändertes Temperaturprofil der Gasentladung sowohl axial als auch radial ändern und damit auch die Isothermie des Entladungsgefäßes verändern. Je nach Wärmekapazität des Entladungsgefäßes muss eine ausreichend langsame Anpassung an die neuen Bedingungen im Plasma bis hin zum Erreichen des thermischen Gleichgewichts erfolgen. Dies benötigt je nach Form und Volumen des Entladungsgefäßes unterschiedlich lange Zeitspannen.

Wird die untere Frequenz FM2 für die akustisch angeregte Durchmischung des Bogenplasmas unterschritten, tritt eine abrupte Änderung der Lampenimpedanz auf und die Metallhalogenid-Mischung des Bogenplasmas geht wieder in den wenig beeinflussten oder gänzlich unbeeinflussten Zustand über.

Besonders bevorzugt sind folgende Ausführungsformen.

Für alle anwendungsrelevanten Metallhalogenidmischungen, beispielsweise mit Alkalihalogeniden und/oder Seltenerdhalogeniden, insbesondere Jodiden wie den folgenden Komponenten:

Nal bzw. Lil oder Csl und Seltenerd(SE)-Komponenten Cel3, Dyl3, Nal3, Prl3, Hol3, Tml3,Dyl3 sowie evtl. weitere Anteile von Znl2, Inl, TII, Mgl2, Cal2, Hg und Zn, insbesondere bei molaren Anteilen des Alkalihalogenidgehaltes $\leq$ 90 mol-%

wird im wesentlichen folgendes Verhalten beobachtet und es wird folgendes schrittweises Vorgehen für die Auswahl der optimalen Betriebsparameter vorgeschlagen und durch ein automatisches Einstellen in einem entsprechend ausgestatteten elektronischen Vorschaltgerät realisiert.

Schritt1:

Als Signalpegel wird der AM-Grad AMI herangezogen. Der AM-Grad AMI, auch als AM-Index bezeichnet, ist definiert durch

$$AMI = (Umax-Umin)/(Umax+Umin).$$

Umax und Umin ist die maximale und minimale Brennspannung. Der Wert von AMI wird für die Bestimmung der optimalen akustischen Plasmamischung so lange schrittweise erhöht, bis die Lampenimpedanz während des Durchfahrens des mischenden Frequenzbereichs FM statt eines einzigen Maximums mindestens zwei ausgeprägte, charakteristische Maxima ZMAX1 und ZMAX2 zeigt, zwischen denen ein Impedanzminimum ZMIN liegt.

Unter Umständen können Verhältnisse auftreten, die umgekehrt bei erhöhtem Plasmadurchmischungsgrad zu verringerter Lampenimpedanz führen; daher gilt allgemeiner, dass zwischen zwei Extremwerten ZEXTR1 und ZEXTR2 ein inverses Extremum ZINV liegt.

Daher wird vorteilhaft bei der Auswertung der Betrag der Lampenimpedanz, am besten im Vergleich zum annähernd nichtdurchmischten Zustand Zrel, herangezogen, also Z(fAM) ~|Z(fAM)/Zrel|.

Vorteilhaft wird die absolute Lampenimpedanzänderung auf den nur unwesentlich gemischten Zustand an den Frequenzendpunkten ST und SP bezogen, also entweder auf Z(fAM = ST) oder auf Z(fAM = SP). Da beide Werte in etwa gleich groß sind, kann stattdessen bevorzugt auch deren Mittelwert als Referenzimpedanz ZREF = (Z(fAM = ST) +Z(fAM = ST))/2) verwendet werden.

Diese normierte Impedanz kann zur Vereinfachung der Auswertung mit einem beliebigen Faktor k multipliziert sein, so dass gilt:

$$Zn(fAM) = k * | Z(fAM)/Zrel |$$

Sie wird im weiteren als Kenngröße der Impedanz verstanden und daher vereinfacht unverändert als Impedanz bezeichnet.

Im Verlauf der Frequenzänderung der Amplitudenmodulation von ST nach SP ergeben somit bei für die jeweilige Metallhalogenidmischung charakteristische Änderungen der Lampenimpedanz Z(fAM), die ein verstärkt durchmischtes Plasma anzeigen. Bei relativ geringem Alkaligehalt zeigen sich Maxima, während sich für andere Metallhalogenidmischungen mit deutlich erhöhtem Alkaligehalt charakteristische Impedanzabsenkungen bei verstärkt durchmischtem Plasma zeigen, so dass in jedem Fall sich Maxima der Kenngröße $Zn(fAM)$ ausbilden.

Zur Bestimmung der Maxima von $Zn(fAM)$ wird der Modulationsgrad AMI stufenweise erhöht und bei jeweils konstant gehaltenem AMI immer wieder ein Scan über das mischende Frequenzintervall [ST,SP] durchgeführt, bis sich die charakteristischen Impedanzänderungen der Funktion $Z(fAM)$ zeigen. Dabei kann der Modulationsgrad AMI, typisch beginnend bei einem Wert von ca. 5-10 %, in Schritten um jeweils ca. 2-5 % erhöht werden, so dass im Schnitt etwa 4 bis 12 Durchläufe nötig sind. Ein ausreichender Maximal-Wert des AM-Grads liegt normalerweise zwischen 20 und 40%.

Es hat sich herausgestellt, dass unterhalb der Frequenz des zweiten Impedanzmaximums ZMAX2 bei niedriger Frequenz im Verlaufe der Frequenzverschiebung vom oberen Startpunkt ST zum unteren Endpunkt SP keine Plasmamischung mehr erfolgt. Das heißt, FM2 ist durch die Frequenz, bei der ZMAX2 auftritt, gegeben.

Die Änderung von $Z(fAM)$ nach Überfahren des der unteren Scan-Frequenz SP benachbarten Maximums ZMAX2 bei der Frequenz FM2 ist deutlich höher als im restlichen Scanbereich. Die Ursache ist eine charakteristische Änderung des Temperaturprofils der Bogenentladung. Dieses Verhalten zeigt sich übereinstimmend bei allen Metallhalogenidentladungsplasmen, wobei eine starke Änderung der Lampenimpedanz von typ. 5-20% beim Übergang in den ungemischten Plasmazustand in der Nähe von SP festgestellt werden kann. Diese abrupte Änderung tritt zumindest innerhalb eines Zeitraumes einiger zehntel Sekunden auf.

Das heißt, dass die Kenngröße der Änderung der Impedanz Z mit der Frequenz fAM einen Extrempunkt erreicht, wobei also der Wert $dZ(fAM)/dfAM$ ein negatives Minimum erreicht. Eine Auswertung der Impedanzcharakteristik nach diesem Kriterium kann vorteilhaft darüber hinaus zur Bestimmung der Festlegung der unteren AM-Frequenz FM2 für die Plasmamischung herangezogen werden.

Weiterhin wurde gefunden, dass aus dem Gesamtverhalten der Verschiebung von FM2 als Funktion des AM-Grads AMI der für einen langzeitstabilen Betrieb notwendige AM-Grad AMI bestimmt werden kann.

Hierzu wird ein Schritt2 angewandt:

Man bestimmt die Verschiebungsrate der Funktion FM2(AMI) im Bereich eines AM-Grads von ca. 5%-35% in typischen Schritten von ca. AMI =2.5% (z.B. 10 Durchläufe). Dabei ergibt sich beim Übergang von der Ausbildung eines einzigen Impedanzextremums zu einer größeren Zahl gleichartiger (typisch zwei) Impedanzextrema eine verstärkte Verschiebung der Frequenz FM2 mit dem AM-Grad. Nach Überschreiten des Bereichs verstärkter Verschiebung zeigt die Funktion FM2(AMI ) mit weiter zunehmendem AMI wieder eine deutlich geringere Änderungsrate. Es wird ein AM-Grad AMIopt ausgewählt, der dem Bereich erhöhter Durchmischung beim Auftreten von mehr als einem Impedanzextremum zugeordnet wird. Typischerweise ist dies ein AM-Grad AMIopt der um ca. 3 bis 10 %, insbesondere um 5%, höher liegt als jener AM-Grad, bei dem gerade sich das zweite Impedanzextremum ausbildet.

3.Schritt: Einstellung der Anregungsfrequenz für erhöhte Plasmamischung:

Mit dem in Schritt 2 festgelegten AM-Index AMIopt wird nun beginnend von ST oder mindestens von FM1 in Richtung nach FM2 die AM-Frequenz fAM mit vergleichbarer Frequenzänderungsrate wie in Schritt 1 (typ. 0.1-0.5kHz/sec) bis zu einem Frequenzpunkt fAMopt gefahren, der am Frequenzpunkt des Minimums (allgemeiner: des inversen Extremums) der Impedanzänderung FM2<FMmin<FM1 liegt.

Es zeigt sich, dass sich im Bereich zwischen FMmin und FM2 die Durchmischung des Bogenplasmas verbessert. Die stärkste Einschnürung des Bogenprofils wird bei FM2 als symmetrische Ausbildung zweier eingeschürter Bogenbereiche beobachtet. Die stärkste Änderung der Plasmaimpedanz wird nach Unterschreiten des Frequenzpunktes FM2 bei weiterer Frequenzverringerung infolge des abrupten Ausfalls der von außen aufgeprägten, also erzwungenen Durchmischung beobachtet. Dieser Effekt stellt sich sowohl in vertikaler wie horizontaler Brennlage ein.

Für eine stabile Plasmadurchmischung hat sich überraschend die exakte Einstellung auf FM2 als nicht zweckdienlich erwiesen, da Effekte wie die Langzeitdrift und geringfügige Änderungen der Plasmazusammensetzung durch Aufzehrung o.ä. wie auch Änderungen in der Verteilung der Füllungskomponenten sehr leicht zur Störung einer über lange Zeit stabilen effektiven Durchmischung des Plasmas führen können.

Abhilfe schafft hier die Einstellung auf eine etwas höhere Frequenz. Am günstigsten sowohl für die gezielte Einstellung der Farbtemperatur als auch für eine hohe Lichtausbeute sowie für eine hohe Farbstabilität hat sich der Frequenzbereich zwischen der unteren Grenzfrequenz FM2, der das untere Impedanzmaximum ZMAX2 zugeordnet ist, und der etwas höheren Frequenz FMmin, der das zwischen ZMAX2 und ZMAX1 liegende Impedanz-Minimum ZMIN zugeordnet ist, erwiesen.

Der Abstand zwischen der unteren Grenzfrequenz FM2 und FMmin hängt vom AM-Grad ab, er kann folglich in einem gewissen Ausmaß mit Hilfe des AM-Grads eingestellt werden. Je höher der AM-Grad gewählt wird, desto ausgeprägter ist das Impedanzminimum ZMIN und umso größer ist der Abstand zwischen FM2 und ZMIN. Diese Überlegung kann insbesondere zur Festlegung des letztlich gewählten AM-Grads AMopt dienen.

In praktischen Untersuchungen hat sich herausgestellt, dass mit Hilfe des AM-Grads mindestens ein Abstand von 400 Hz, insbesondere bis zu 900 Hz, zwischen der Frequenz FM2 und FMmin eingestellt werden sollte, wodurch Langzeitstabilität über die gesamte Lebensdauer erzielt wird.

Die Erzeugung des Kennlinienfeldes mit den charakteristischen Signalpegeln AMI wie auch mit den charakteristischen Frequenzen und die Bestimmung der Grenzfrequenzen (ST, SP, FM1,2) für akustische Plasmamischung, insbesondere durch die zweite longitudinale Resonanz, wird typischerweise erst nach dem Lampenanlauf, also 1 bis 3 min nach dem Lampenstart, mit einer Frequenzverschiebungsrate von ca. 100 Hz/s bis 1 kHz/s (AM oder HF) mit einer Schrittweite (Auflösung)von 100 bis 200 Hz durchgeführt. Diese Messung kann einmalig nach dem ersten Lampenstart oder auch wiederholt in regelmäßigen Zeitabständen oder bei jedem Lampenstart durchgeführt werden.

Weiterhin erweist sich für eine stabile Langzeiteinstellung die Beachtung folgender Erkenntnisse als vorteilhaft.

Es wurde überraschend gefunden, dass trotz Änderung der Lampenimpedanz nach längerer Brenndauer weiterhin das aktuelle lokale Minimum der Lampenimpedanz ZMIN(a) in der Nähe des beim erstmaligen Lampenstart gefundenen Impedanzminimums ZMIN(i) zu finden ist, so dass ZMIN(i) immer als Anhaltspunkt für eine optimale akustische Plasmadurchmischung benützt werden kann.

Es hat sich gezeigt, dass nach dem erstmaligen Scan weiterhin das Impedanzminimum trotz gewisser Drift durch deutlich langsamere Frequenzänderungsraten von 50-100 Hz/min in Schritten von ca. 50 bis 100 Hz verfolgt werden kann.

Mit dieser Vorgehensweise lässt sich die Farbstabilität der Lampe in einer besonders bevorzugten Ausführungsform des Verfahrens deutlich verbessern. Es wird daher außerdem ein erweitertes, auf dem ersten Verfahren der Schritte 1-3 aufbauendes Betriebsverfahren zur Farbeinstellung von mittels Amplitudenmodulation und HF-sweep betriebenen Hochdruckentladungslampen vorgeschlagen:

Dazu wird als Ausgangspunkt das untere Impedanzmaximum ZMAX2 mit Frequenz FM2 herangezogen, oder auch eine innerhalb des Durchmischungsbereichs befindliche Frequenz, die um mindestens 150 Hz, bevorzugt mindestens 200 Hz, höher als FM2 liegt. Diese Frequenz wird dann in Schritten von 50 bis 150 Hz erhöht und dabei die Lampenimpedanz vermessen. Nach einer Einschwing-Zeitspanne von mindestens 1 min wird die Lampenimpedanz nochmals bei den vorher durchgescannten Frequenzpunkten gemessen und aufgezeichnet, beispielsweise in einem nichtflüchtigen Speicher, in dem die Daten mittels einer Mikroprozessorsteuerung abgespeichert werden.

Nach Überschreiten eines sich einstellenden Minimums der Lampenimpedanz wird die letzte Frequenz unmittelbar vor dem Auftreten des Minimums, also die Frequenz, die in der Schrittfolge der dem Impedanz-Minimum zugeordneten Frequenz unmittelbar vorangeht, eingestellt.

Ein derartiges Einstellverfahren ist sehr zuverlässig, allerdings kann dieses Standardverfahren aufgrund der langen Einstellzeiten pro Frequenzpunkt (ca. 1 bis 5 min) aber relativ lange dauern.

Daher wurden alternativ auch schneller ablaufende Frequenzscans durchgeführt und mit dem sorgfältigen, langsamer ablaufenden Standardverfahren verglichen. Ziel ist dabei, dass trotz der Kürze der Messzeit immer noch eine ausreichende Füllungsablagerung gewährleistet wird, die nahezu den Verhältnissen im Dauerbrennzustand, repräsentiert durch das Standardverfahren, entspricht.

Es zeigt sich, dass auch deutlich schneller durchgeführte Frequenzscans mit Frequenzverschiebungsraten von 100 bis 300 Hz/sec , welche eigentlich keine ausreichende Füllungsablagerung mehr zulassen, zur Bestimmung des optimalen Frequenzpunktes herangezogen werden können. Besonders bevorzugt ist das folgende Verfahren:

Hierzu wird mehrmals, insbesondere mindestens zweimal, mit einer Frequenzverschiebungsrate von 100 bis 300 Hz/sec ein Bereich der Frequenzen fAM abgefahren, ausgehend von einer hohen Frequenz ST, die am oberen Ende des Bereichs der Plasmadurchmischung liegt, bis zu einer niedrigen Frequenz SP, die unterhalb der geringsten Frequenz für Plasmamischung FM2 liegt. Eine typische Breite des zu überstreichenden Frequenzintervalls ist 5-10 kHz. Dabei wird die Frequenz der Amplitudenmodulation verschoben und die Lampenimpedanz Z(fAM) an jedem Frequenzmesspunkt fAM, und zwar mit einer typischen Verharrungszeit von 0.2 bis 1 sec pro Frequenzmesspunkt, gemessen. Die Messwerte werden in einem nichtflüchtigen Speicher gespeichert.

Für die Wahl des Frequenzpunktes für den optimalen Betrieb wird der Impedanzverlauf zwischen Impedanzmaximum ZMAX bei der Frequenz FM2, unterhalb welcher keine Plasmadurchmischung mehr auftritt, und dem vorgelagerten Impedanz-Minimum ZMIN bei etwas höherer Frequenz FMmin herangezogen.

Nach Erreichen des Bereiches durch Schritt3 wird somit ein Schritt4 durchgeführt.

Dabei wird ein bevorzugter optimaler Frequenzpunkt fopt aus dem Bereich zwischen dem Punkt FMmin und dem Punkt FM2+1/5x(FM2-FMmin) ausgewählt.

Der Frequenzpunkt fopt, der hierdurch gefunden wird, hat im Wesentlichen die gleichen Eigenschaften wie jener Frequenzpunkt FMmin, welcher bei langsam durchgeführtem Scan der Lampenimpedanz ein lokales Minimum der relativen Impedanzänderung zeigt und dadurch als optimaler Frequenzpunkt für ein dauerhaftes Gleichgewicht der Durchmischung ausgezeichnet ist.

Wird die Lampenleistung durch das Vorschaltgerät geregelt (z. B. zum Zweck der Dimmung), ist nach dem Einstellen einer anderen Lampenleistung erneut der gesamte Messvorgang zu wiederholen, um den optimalen Frequenzpunkt für die neu eingestellten Lampenparameter zu bestimmen.

Diese Leistungsanpassung kann durch bekannte Charakteristiken der Lampeneigenschaften, welche bereits beim Hersteller bestimmt wurden und evtl. im elektronischen Vorschaltgerät bereits gespeichert sind, nach dem obigen Prinzip unter Wahrnehmung abkürzender Schrittfolgen mit deutlich kürzerem Zeitaufwand als bei der ersten Messung durchgeführt werden.

Das gesamte Verfahren kann selbständig von einem programmierten elektronischen Vorschaltgerät, das von einem Mikroprozessor gesteuert wird, durchgeführt werden und lässt außerdem die Anpassung der relevanten Betriebsparameter für verschiedene Lampentypen (beispielsweise unterschiedlicher Farbtemperatur) einer Lampenleistung zu. Ähnliches gilt für gleiche Lampentypen mit nicht zu stark unterschiedlicher Lampenleistung. Damit steht ein einziges elektronischen Vorschaltgerät für einen HF-Betrieb mehrerer Lampentypen zur Verfügung, mit Betriebs-Stabilisierung unter Nutzung longitudinaler akustischer Resonanzmodi, bevorzugt der zweiten akustischen Resonanz. Schließlich erlaubt diese Technologie auch die Einstellung verschiedener Farbtemperaturen bei einer Lampe, beispielsweise, indem verschiedene akustische Resonanzmodi angeregt werden.

Die Erfindung beinhaltet auch Kombinationen der oben beschriebenen Verfahren und die Implementierung des Verfahrens in ein Vorschaltgerät. Die Zeitbereiche bis zum Beginn der beschriebenen Prozeduren, d.h. der wirkungsvollen Änderungen der Frequenzen und AM-Grade werden durch die Leistungseinkopplung des Vorschaltgerätes in der Anlaufphase bestimmt. Die angegebenen Zeiträume können durch einen kurzzeitig erhöhten Leistungseintrag direkt nach dem Start der Bogenentladung um bis zu 50% verkürzt werden. Umgekehrt kann der oben angegebene Zeitraum bei Anwendung für Entladungsgefäße mit besonders hoher Wärmekapazität auch bis zu 200 % erhöht werden.

Des weiteren können die Messschritte zur Bestimmung der Frequenz fAM und des AM-Grads mehrmals durchlaufen werden.

Vorteilhaft können vom Hersteller des Systems, bzw. des Vorschaltgerätes und geeigneter Lampen, Charakteristiken für bestimmte Kombinationen aus Lampengeometrie und Füllungssystem im EVG vorprogrammiert werden, so dass ein abgekürztes Verfahren nur unter Nutzung von einzelnen Teilschritten verwendet werden kann. Es wird jedoch empfohlen, die Einstellung von fopt bei einem gegebenem AM-Grad AMI immer wieder zu überprüfen und ggf. anzupassen, so dass zumindest Schritt3 bei jedem Lampenstart durchlaufen wird.

Über automatische Messungen der Brennspannung und Impedanz der Lampe kann zusätzlich ein Start- bzw. Abschaltkriterium für die zu betreibende Hochdruck-Lampentype definiert eingestellt werden.

Neben dem Verfahren beinhaltet die Erfindung auch elektronische Vorschaltgeräte mit Mikroprozessoren, in denen die beschriebenen Prozeduren implementiert sind.

## Kurze Beschreibung der Zeichnungen

Im folgenden soll die Erfindung anhand mehrerer Ausführungsbeispiele näher erläutert werden. Es zeigen:

Figur 1        ein Entladungsgefäß einer Hochdrucklampe, schematisiert;

Figur 2        ein schematisiertes Leistungsspektrum einer mit AM und FM modulierten Hochdrucklampe zur Stabilisierung mittels akustisch angeregter longitudinaler Resonanz;

Figur 3a        zwei typische Impedanzverläufe als Funktion der Frequenz fAM bei unterschiedlichem Amplitudenmodulationsindex AMI für eine Hochdrucklampe mit 70W;

Figur 3b        ein Vergleich des typischen Impedanzverlaufs bei einer Änderung des Amplitudenmodulationsindex AMI einer Hochdrucklampe mit 70W;

Figur 3c        ein typischer Impedanzverlauf bei mehrstufiger, schrittweiser Änderung des Amplitudenmodulationsindex AMI einer Hochdrucklampe mit 70W;

Figur 4        der Impedanzverlauf aus Figur 3b, normiert auf das Impedanzmaximum und bezogen auf einen Mittelwert der Start- und Stopfrequenz;

Figur 5        die Bestimmung des optimalen Amplitudenmodulationsindex aus der Verschiebungsrate von FM2 in Abhängigkeit von AMI;

Figur 6        die Gliederung des Impedanzverlaufs als Funktion von fAM in Bereiche mit unterschiedlichem Durchmischungsverhalten bei optimaler Wahl des AM-Grads und die Wahl eines bevorzugten Frequenzbereiches;

Figur 7a        das grundsätzliche Ablaufdiagramm zum Auffinden des optimalen Frequenzbereichs;

Figur 7b     das detaillierte Ablaufdiagramm des Vorbereitungsschritts;

Figur 7c     das detaillierte Ablaufdiagramm von Schritt 1 und Schritt 2;

Figur 7d     das detaillierte Ablaufdiagramm von Schritt 3;

Figur 8     den schematischen Aufbau eines elektronischen Vorschaltgeräts.

**Bevorzugte Ausführung der Erfindung**

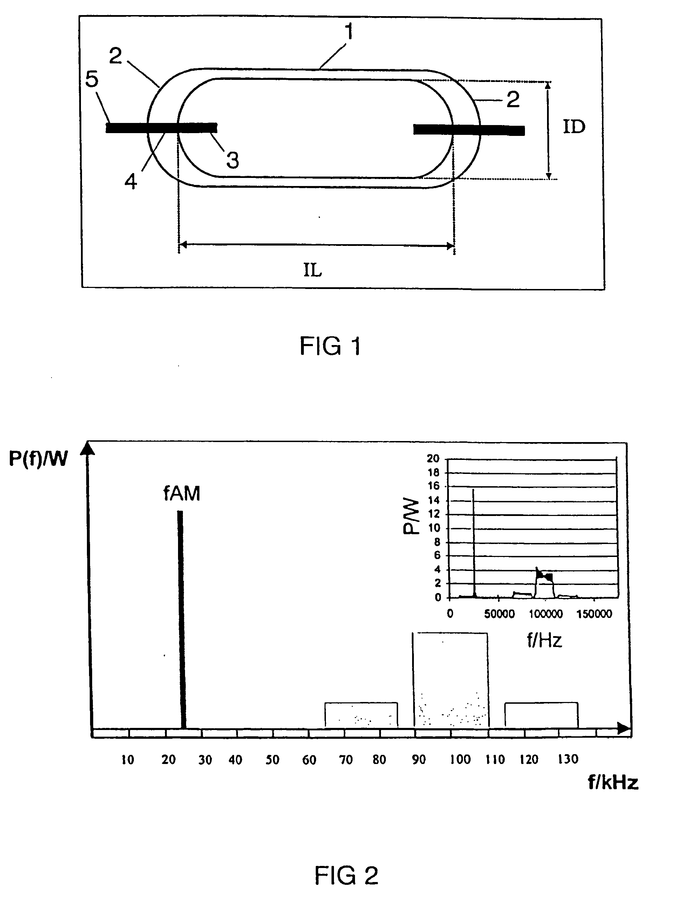

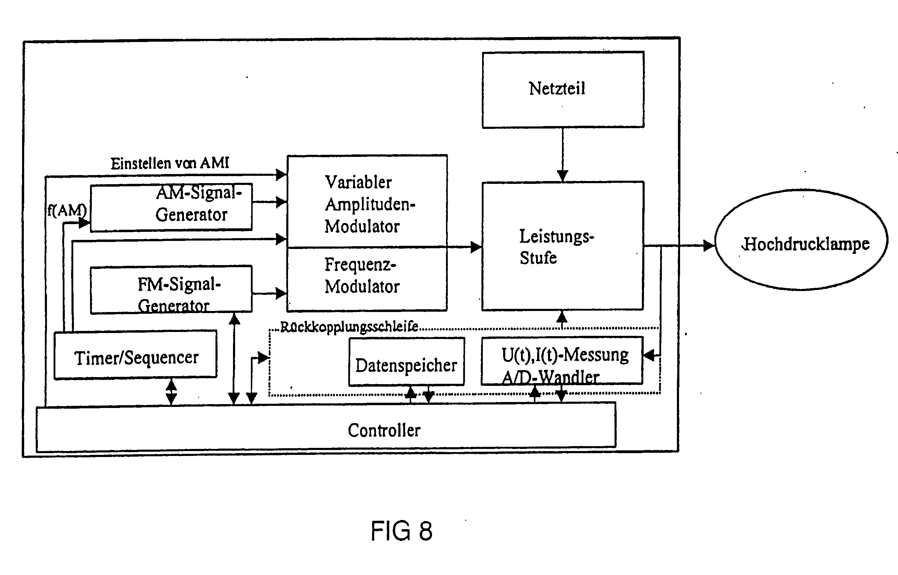

In Fig. 1 ist eine schematische Darstellung einer Hochdrucklampe mit relativ hohem Aspektverhältnis ID/IL gezeigt. Sie verwendet ein zylindrisches Entladungsgefäß 1 aus Keramik, mit einem gegebenem Innendurchmesser ID und gegebener Innenlänge IL. An den Enden 2 des Entladungsgefäßes sind Elektroden 3 angeordnet, die mittels Durchführungen 4 mit äußeren Stromzuführungen 5 verbunden sind. Das Entladungsgefäß enthält typisch eine Füllung aus Puffergas Hg mit Argon und Metallhalogeniden, beispielsweise einer Mischung aus Alkali- und Seltenerdjodiden sowie des Thallium. Die Lampe wird an einem elektronischen Vorschaltgerät, siehe Figur 8, mit Hochfrequenz in akustisch stabilisierter Resonanz betrieben. Dafür hat sich vor allem die zweite longitudinale Resonanz empfohlen.

Die näher untersuchte Lampe ist eine hocheffiziente Metallhalogenidlampe mit 70 W Leistung. Das Entladungsgefäß hat eine größte axiale Innenlänge IL von 18.7 mm und einen Innendruchmesser ID von 4 mm. Das Aspektverhältnis ist somit 4.7. Die Hochdrucklampe ist mit 4.4 mg Hg und einer Metallhalogenidmischung bestehend aus Nal:Cel3:Cal2: TII = 1.78 : 0.28 : 1.93 : 0.28 mg gefüllt. Der Elektrodenabstand beträgt 14.8 mm.

Durch Voruntersuchungen wurde festgestellt, dass ein bogenstabilisierter Betrieb möglich ist, bei dem der Bogen in vertikaler und horizontaler Brennlage auf die E-lektrodenverbindungslinie zentriert ist. Dafür wird ein Betrieb mit gesweepter Hochfrequenz im Bereich von 45-55 kHz mit typischer Sweep-Rate von fFM = 130 Hz als Ausgangspunkt genommen.

In vertikaler Brennlage zeigt sich nach dem Betriebsstart und einer Aufwärmphase von ca. 120 sec eine segregierte, also entmischte Metallhalogenidverteilung entlang des Bogens. Der in der Dampfphase befindliche Anteil der Metallhalogenide ist nicht gleichmäßig über die Bogenlänge verteilt. Die Emission der Alkali- und SE-Jodide konzentriert sich im unteren Drittel der Lampe, während im oberen Teil bis zur oberen Elektrode hauptsächlich Emission von Hg und TI beobachtet wird. In diesem Zustand besitzt die Lampe eine relativ geringe Farbwiedergabe und eine relativ geringe Lichtausbeute. Hinzu kommt, dass sich die Farbtemperatur in vertikaler Brennlage wesentlich von der bei horizontaler Brennlage unterscheidet, und zwar um bis zu 1500 K.

Durch das Aufprägen einer Amplitudenmodulation mit einer starren Frequenz fAM von ca. 25 kHz mit AM-Grad von 10-30 % wird entsprechend der schematisierten Fig. 2 (kleines Bild zeigt die reale Messung) ein elektrisches Leistungsspektrum in der Lampe bei einer Sweep-Rate von 130 s-1, also über die Zeitspanne von 7,7 ms, im Bereich 20 bis 150 kHz erzeugt. Höhere Ordnungen werden hier aufgrund der Möglichkeit ihrer Unterdrückung nicht weiter berücksichtigt. Der Leistungsanteil im Bereich der AM-Frequenz (25 kHz) wirkt anregend auf die zweite akustische longitudinale Resonanz f002.

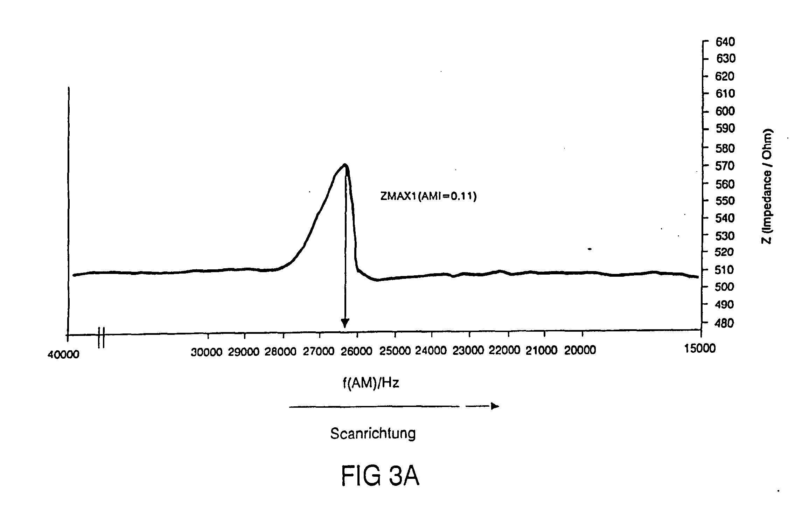

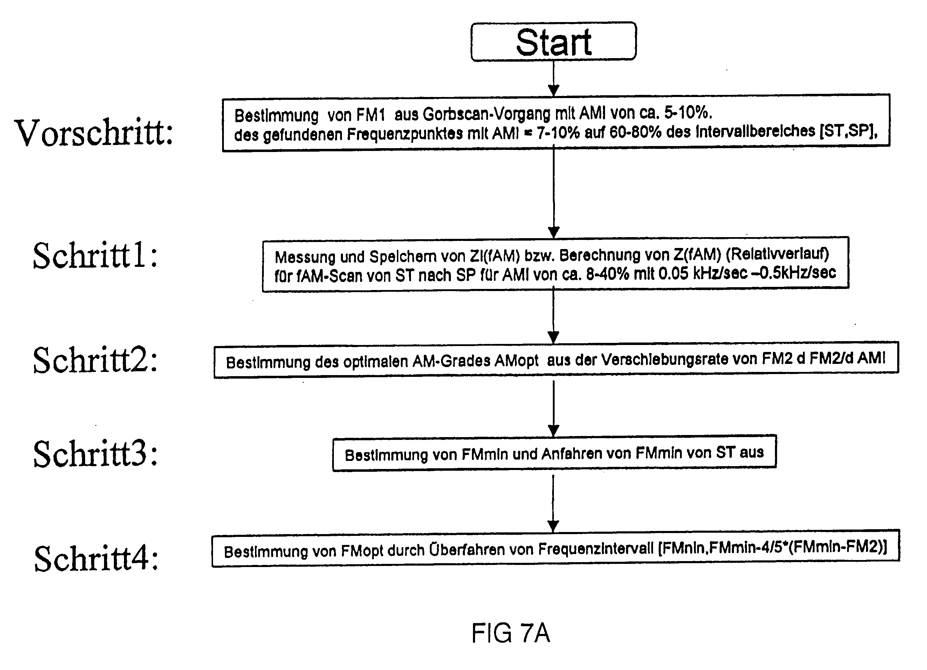

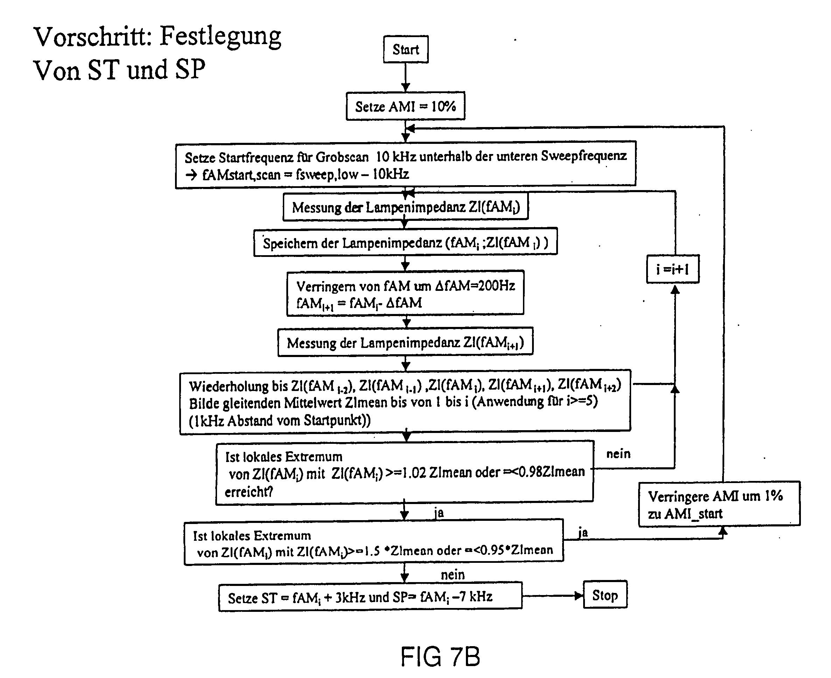

In einem Vorbereitungsschritt wird nun zunächst in vertikaler Brennlage ein weiter Frequenzbereich der Amplitudenmodulation AM im Bereich von ca. fAM = 40 kHz bis hinab zu ca. 15 kHz mit niedrigem, konstantem AM-Grad von etwa 5 bis 15 % in Schrittweiten von 150-250 Hz abgescannt. Dabei zeigt sich im Bereich um 27 kHz eine merkliche Zunahme der Lampenimpedanz (Fig. 3a). Sie entspricht einer Änderung im Mischungsverhalten durch Resonanzeffekte. Mit bloßem Auge zeigt sich abrupt eine deutliche Minderung der Segregation dadurch, dass sich der Bereich des Bogens in der unteren Hälfte des Entladungsgefäßes, der durch erhöhte Alkali und SE-Emission gekennzeichnet ist, in den oberen Bereich des Entladungsgefäßes nach oben hin ausdehnt bis etwa zu dessen Mitte und nach Überfahren eines Frequenzbereiches von 1-2 kHz wieder in den segregierten Zustand zurückgeht. Vergleichbare Änderungen der Lampenimpedanz lassen sich ebenfalls in horizontaler Brennlage bestimmen, wobei ebenfalls eine Änderung der Verteilung des Metallhalogeniddampfdrucks entlang der Bogenachse auftritt. Vergleiche dazu das Prozedur-Ablaufdiagramm, Fig. 7a und 7b.

Dieser Bereich wird als äußerster Frequenzbereich angenommen, welcher nun in einer weiteren Prozedur einer Folge von Frequenz-Scans der AM mit schrittweiser Erhöhung des AM-Grades stärker eingegrenzt wird.

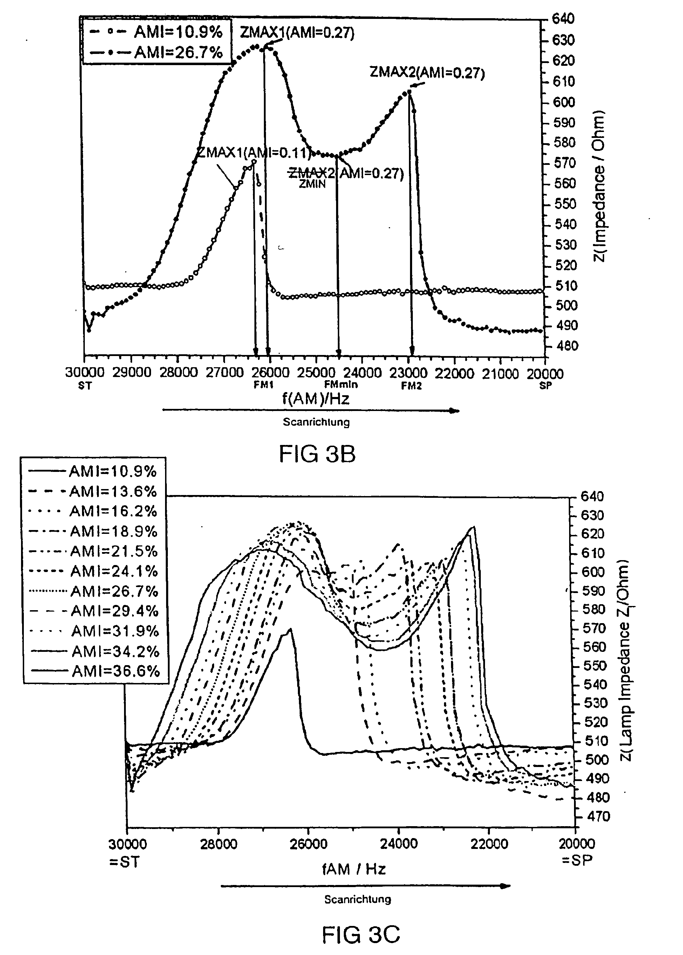

Die Frequenz FM1 von 27 kHz, bei der in diesem Ausführungsbeispiel bei niedrigem AM-Grad das einzige Maximum ZMAX1 der Lampenimpedanz auftritt, wird nun gemäß Figur 3b in ein engeres Intervall von beispielsweise 10 kHz Breite eingebettet, das durch eine Start-Frequenz ST (30 kHz) und eine End-Frequenz SP (20 kHz) festgelegt wird. Dabei wird das Intervall so gewählt, dass die Lage des Extremums (27 kHz) bei niedrigem AM-Grad etwa bei 55-80 % des Gesamten Intervalls von 10 kHz angesiedelt ist, d.h. das Intervall erstreckt sich von ST=30 kHz bis SP=20 kHz.

Das Intervall wird also so gewählt, dass FM1 = SP + m x (ST - SP), mit m = 0,55 bis 0,8. bevorzugt ist m etwa 60 bis 70 %.

Anschließend wird unter Erhöhen des AM-Grads ein erneuter Frequenz-Durchlauf (Scan) von ST nach SP mit einer Scan-Rate von ca. 0,12 kHz/sec mit Verharrungszeit von ca. 0.5 sec an jedem Frequenzpunkt durchgeführt und an diesen Stellen die Lampenimpedanz am Ende der Verharrungszeit ermittelt. Figur 3b zeigt das Prinzip, indem der AM-Grad einmalig sprunghaft auf 27% von vorher 11 % erhöht wurde. Bei der deutlichen Erhöhung des AM-Grads zeigt sich der überraschende Befund, dass ein deutlich ausgeprägtes sekundäres Maximum der Lampenimpedanz (ZMAX2) auftritt. die zugeordnete Frequenz fAM wird mit FM2 bezeichnet. Zwischen den beiden Maxima ZMAX1 und ZMAX2 wird ein Minimum der Lampenimpedanz bei der Frequenz FMmin gefunden.

Beim erfindungsgemäßen Betriebsverfahren werden jedoch schrittweise eine Vielzahl von AM-Graden (hier von 10,9 bis 36,6%) eingestellt. D.h. unter schrittweisem Erhöhen des AM-Grads um 2 bis 5 % (hier 2,4 bis 2,7 %) wird ein wiederholter (hier elf Mal) Frequenz-Durchlauf (Scan) von ST nach SP mit einer Scan-Rate von ca. 0,12 kHz/sec mit Verharrungszeit von ca. 0.5 sec an jedem Frequenzpunkt durchgeführt und an diesen Stellen die Lampenimpedanz am Ende der Verharrungszeit ermittelt. Dabei werden die gemäß Figur 3c gefundenen Lampen-Impedanzwerte Z(fAM) im Mikrocontroller des elektronischen Vorschaltgeräts gespeichert.

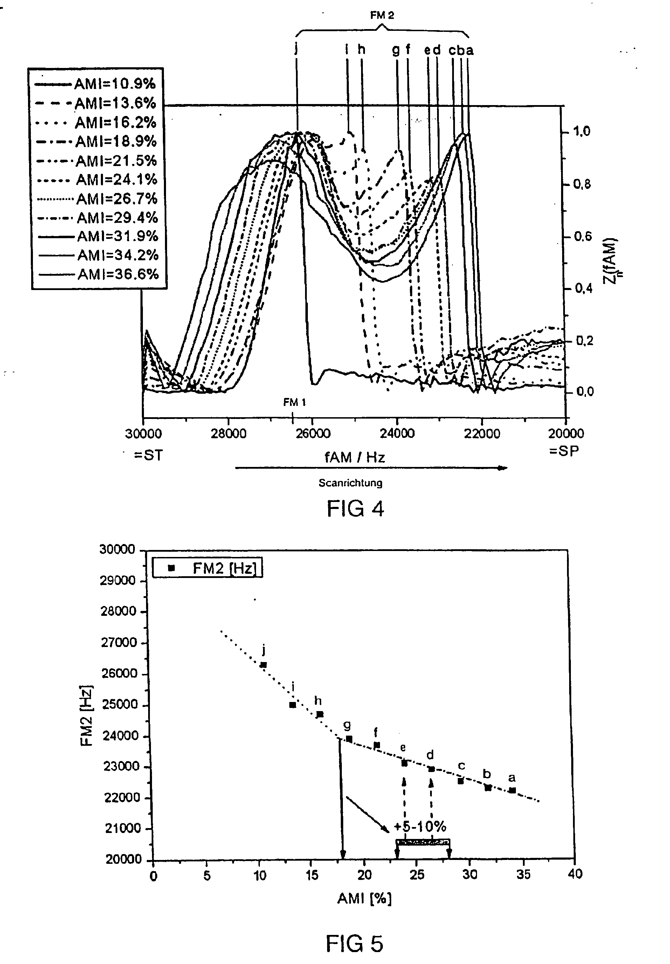

Vorteilhaft kann gemäß Figur 4 das Kennlinienfeld von Figur 3c auch zur besseren Übersichtlichkeit normiert als Zn(fAM) dargestellt werden, beispielsweise bezogen auf die Impedanzwerte am Start- und Endpunkt ST und SP des Scanbereiches, wobei auch ein Mittelwert der Frequenzen ST und SP zur Darstellung herangezogen werden kann, in Figur 4 als =ST und =SP bezeichnet.

Aus diesen Verläufen gemäß Figur 3c oder 4 werden die Frequenzpunkte FM2(AMI) extrahiert. In Figur 4 sind die zugehörigen Maxima FM2 jeweils mit einem Buchstaben von a bis j gekennzeichnet. Nach Unterschreiten dieser sekundären Maxima tritt jeweils eine abrupte Änderung der Impedanz auf.

Die Frequenzen FM2 dieser Maxima werden nun, bevorzugt auch direkt im EVG als Algorithmus gespeichert, gegen den jeweils zugehörigen AM-Grad AMI aufgetragen.

Diese Abhängigkeit ist in Figur 5 dargestellt. Durch abschnittweise Differentiation kann der Bereich des AM-Grades bestimmt werden, ab dem eine erhöhte Durchmischung des Bogenplasmas auftritt, im Beispiel der Figur 5 ist dies der Umschlag-Punkt g. Ab diesem ist das zweite Maximum der Lampenimpedanz besonders deutlich ausgebildet wobei die zugehörige Frequenz FM2 von FM1, der Frequenz des ersten Maximums, durch ein Minimum FMmin getrennt ist, siehe auch Figur 3b. Ein optimaler AM-Grad AMIopt wird aus dem Befund von Figur 5 dadurch extrahiert, dass noch mindestens ein Wert von 5 % auf den am Umschlag-Punkt (hier: g) ermittelten AM-Grad (hier: etwa 18 %) aufgeschlagen wird.

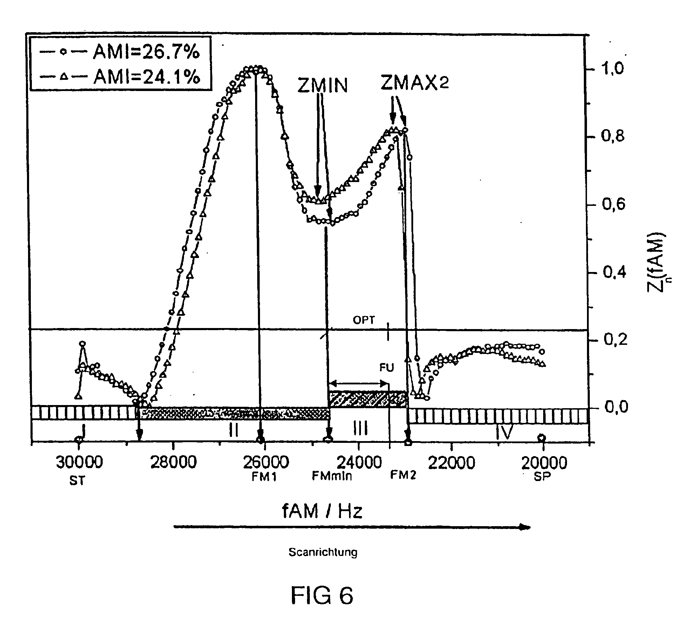

In Figur 6 ist der relative Verlauf der normierten Impedanz Zn für zwei AMI-Werte in der Nähe des optimalen AM-Grades für stabilen Langzeitbetrieb angegeben. Gleichzeitig ist eine Gliederung des Impedanzverlaufes in vier Bereiche I bis IV eingezeichnet, die in Abhängigkeit vom Impedanzverlauf verschiedenen Mischungszuständen des Metallhalogenidplasmas im Entladungsbogen entsprechen.

In den Bereichen I und IV (Leiste schraffiert) ist die akustische Ankopplung an das Bogenplasma minimal, da die Anregungsfrequenzen zu stark von den effektiven Resonanzfrequenzen entfernt sind. Das führt lediglich zu einer geringfügigen Änderung der Lampenimpedanz in Abhängigkeit von der Frequenz fAM. Im Bereich II (Leiste grau hinterlegt) zeigt sich zwar schon eine verstärkte Plasmamischung. In horizontaler Brennlage bildet sich im Bereich II bereits ein zentral abgelagerter Ring aus Füllungsmaterial. Die verstärkte Mischung reicht aber in vertikaler Brennlage noch nicht zuverlässig aus, um im Bereich der oberen Elektrode eine deutliche Aufhebung der Segregation zu erzielen. Im Stand der Technik wurde jedoch gerade dieser Bereich, weil er einfach zu finden ist, bisher gezielt angesteuert.

Der bevorzugte Bereich der Einstellung ergibt sich erfindungsgemäß in Bereich III (schraffierte und hervorgehobene Leiste). Er liegt zwischen den Frequenzen FM2 und FMmin bei einer Impedanz zwischen dem Minimum und dem sekundären Maximum. Hier wird knapp unterhalb der AM-Frequenz des Minimums, FMmin, eine deutlich bessere Plasmamischung erzielt als im Bereich II. Erst hier ergibt sich eine weitere Erhöhung der Farbwiedergabe und der Lichtausbeute sowie eine gute Übereinstimmung zwischen den lichttechnischen Werten in vertikaler und horizontaler Brennlage.

Die Einstellung einer Frequenz fAM für den weiteren Betrieb kann nun mit deutlich höherer Verharrungszeit pro Frequenzpunkt erfolgen.

In einem weiteren Ausführungsbeispiel ist es auch möglich, keinen bestimmten festen Frequenzpunkt fopt im Bereich III fest einzustellen, sondern systematisch und periodisch im Intervall OPT von FMmin bis etwa FU = FM2 + 1/5x(FMmin-FM2) verschiedene Frequenzpunkte im Laufe des Betriebes der Lampe aufzuprägen. Die Variation des Frequenzpunktes im o.g. Bereich kann zu geringfügiger Verschiebung der Farbtemperatur (typisch einige 10 K) bei annähernd gleicher Lichtausbeute führen. Der Prägebereich umfasst also etwa bis zu 4/5 des Bereichs III.

Eine hohe Lampenstabilität und annähernd gleiche Farbtemperaturen für beliebige Brennlage ergibt sich bei einer einfacheren Ausführungsform durch Einstellung auf einen festen Frequenzpunkt fopt innerhalb des Intervalls OPT im Bereich III, bevorzugt in einem Band, das aufgespannt ist durch die Frequenzpunkte fopt = FM2 + Rx(FMmin-FM2) mit $0,3 \leq R \leq 0,7$.

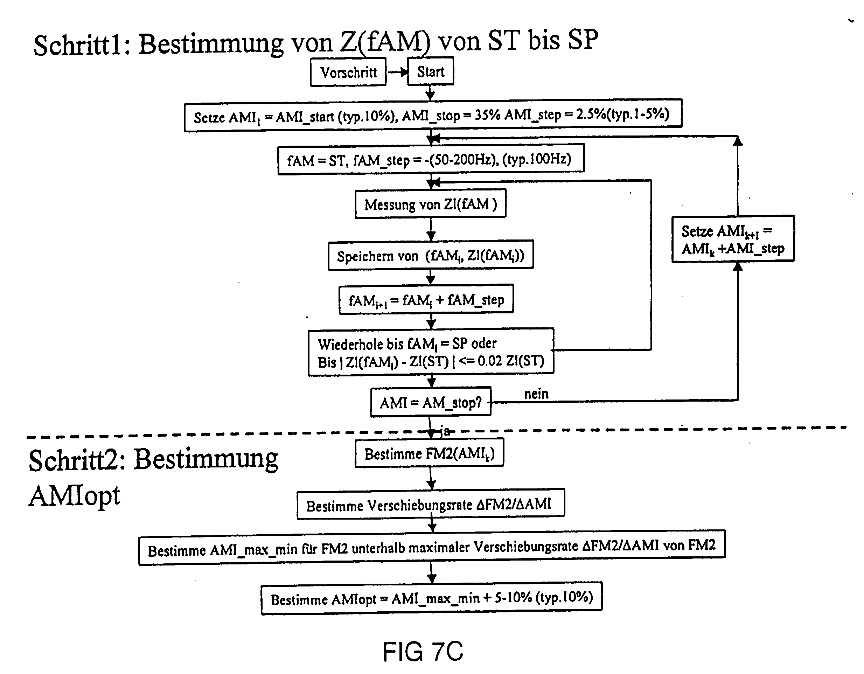

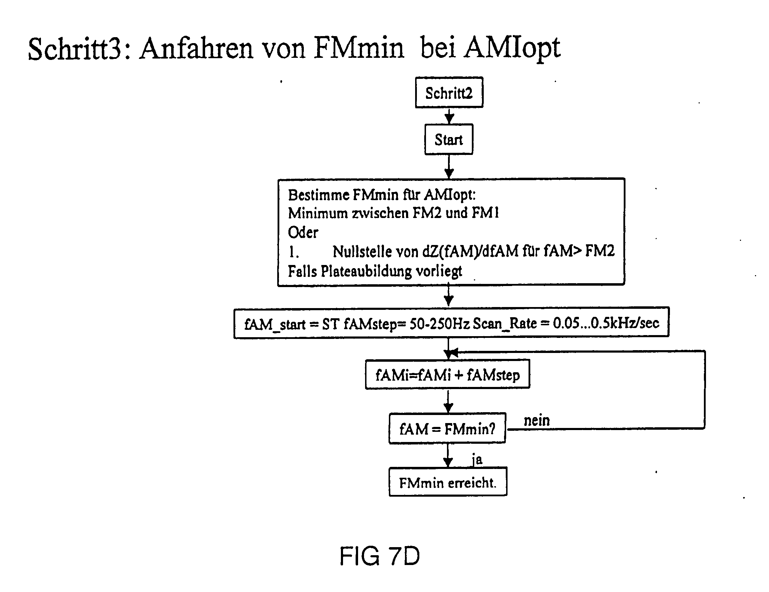

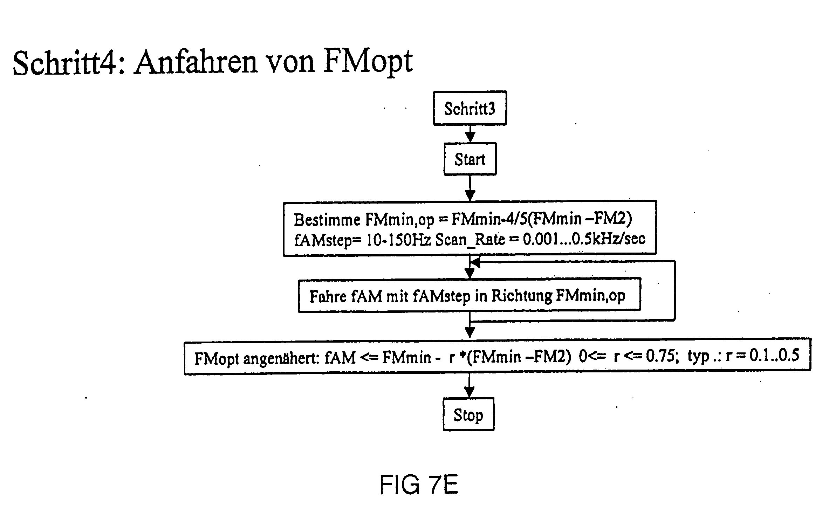

Figur 7 zeigt den Ablauf des Betriebsverfahrens schematisch. In Figur 7a sind alle 5 prinzipiellen Schritte zusammengefasst. Nach dem Lampenstart und Abwarten einer Karenzzeit (typisch eine Minute) erfolgt zunächst ein Vorbereitungsschritt.

Beim Vorbereitungsschritt wird bei einem sehr niedrigen AM-Grad von 5 bis 15 % (typisch 10 %) zunächst eine erste Resonanz des Impedanzwertes Z, also ZEXT1 theoretisch oder experimentell dadurch bestimmt, dass ein großes Frequenzintervall abgefahren wird, das mit Sicherheit das Extremum beinhaltet. Der zugehörige Frequenzpunkt FM1 wird zur Festlegung eines Messintervalls MI herangezogen, das eine Breite von 8 bis 25 kHz mit den Grenzpunkten ST (obere Grenzfrequenz) und SM (untere Grenzfrequenz) hat, und in dem FM1 so angeordnet ist, dass FM1 etwa bei 55 bis 80, bevorzugt 60 bis 70 % der Entfernung zwischen SM und ST liegt, wobei FM1 immer näher bei ST liegen muss.

Das Messintervall wird immer von oben nach unten, also von ST nach SP, durchfahren.

Schritt 1 ist Bestimmung eines Kennlinienfelds, das gegeben ist durch Abfahren verschiedener stufenweise veränderter AM-Grade in einem maximalen Bereich AMI = 5 bis 45 %, insbesondere 10 bis 40 %, wobei jeweils das Messintervall MI abgefahren wird. in der Regel genügen etwa 6 bis 15 Stufen der Veränderung des AM-Grads. Der maximale Bereich AMI soll an seinem unteren Ende einen AM-Grad umfassen, bei dem praktisch nur ein einziges Extremum (meist Maximum) der Lampenimpedanz erkennbar ist und an seinem oberen Ende einen AM-Grad umfassen, bei sich zumindest ein zweites Maximum deutlich herausgeschält hat.

Schritt 2 ist die daraus abgeleitete Bestimmung des optimalen AM-Grads AMI = AMopt durch Vergleich der Änderung der Lampenimpedanz als Funktion der Frequenz bei den verschiedenen AM-graden. Festlegung von AMopt geschieht durch Bestimmung des Maximums der Änderung der Lampenimpedanz. Der zugehörige Wert von AMI sei AMmd. Er wird nochmals um einen Wert W von 3 bis 10 % höher gesetzt, um AMopt zu erhalten, also AMopt = AMmd + W.

Schritt 3 ist das Aufsuchen der zu AMopt zugehörigen Frequenz FMmin(AMopt). Sie lässt sich aus dem Kennlinienfeld heraus bestimmen und bei der Lampe vom Starpunkt ST aus anfahren.

Schritt 4 ist schließlich die endgültige Festlegung der Betriebsfrequenz FMopt, indem das Frequenzintervall OPT zwischen FMmin und einem Wert, der 20 % von FM2 entfernt im Intervall zwischen FMmin und FM2 liegt, überfahren wird und die entsprechenden Betriebsdaten analysiert werden.

Die fünf Schritte sind im Detail in Figur 7b bis 7e dargestellt. Anschließend kann das EVG den Dauerbetrieb bei AMopt und FMopt durchführen. Zusätzlich kann ein Abschaltmechanismus vorgesehen sein, beispielsweise eine end-of-life-Schaltung oder eine Abfrage, die den normgerechten Betriebszustand ständig überwacht. Evtl. kann bei Abweichung beispielsweise Schritt 3 und 4 während des Dauerbetriebs nochmals zur Nachregelung durchgeführt werden.

Einzelne Schritte können auch gezielt zur regelbaren Einstellung von Lampenparametern wie der Farbtemperatur benutzt werden.

In Fig. 8 ist ein Prinzipschaltbild eines zugehörigen EVGs gezeigt. Es weist folgende essentielle Komponenten auf:

Timer/Sequencer: Hier erfolgt die Zeitschema-Kontrolle zur Steuerung der Zeitdauer der Aufwärmphase und Einsetzen der Prägephase nach Zünden und Bogenübernahme der Hochdrucklampe. Hier erfolgt außerdem die Steuerung der Sweep-Rate für die Lampenbogen-Stabilisierung.

Weiterhin wird die Scan-Rate sowie Verweildauer am jeweiligen Frequenzpunkt beim Durchlaufen von Frequenz-Scans sowie die Festlegung von Pausenzeiten zwischen aufeinaderfolgenden Prozedurschritten gesteuert.

Power stage (Leistungsendstufe): Voll- oder Halbbrücke mit strombegrenzenden Elementen und typischen Frequenzgang. Sie ist über eine Versorgungsschiene (450 V DC) an das Netzteil gekoppelt.

Feed-back-Loop (Rückkopplungsschleife): Betriebserkennung der Lampe evtl. Rückkopplung von Lampenparametern wie Lampenstrom und Lampenspannung zur Einstellung der Steuerparameter und Festlegung von Aufwärm- bzw. Prägephase, bzw. Wiederholung von Prägephasen mit anderen Abstimmparametern.

Hier ist ein Schaltungsteil zur hinreichend genauen Messung von Strom und Spannung am EVG-Ausgang (Lampe) implementiert. Über diesen werden über einen A/D-Wandler die Messwerte für die Verarbeitung im Controller weiterverarbeitet. Die anfallenden Daten werden für weitere Auswertungsprozeduren in einen DatenSpeicher geschrieben.

Lampe: Hochdruck-Entladungslampe (HID lamp).

FM-Modulator: Hochleistungsfrequenzmodulator.

AM-Modulator: Analoger variabler Hochleistungsmodulator mit Möglichkeit der Kontrolle sowohl der Frequenz fAM als auch des AM-Grades AMI.

AM-Signal-Generator: Digital oder Spannungskontrollierter Oszillator.

FM-Signal Generator: Digital oder Spannungskontrollierter Oszillator.

Power Supply (Netzteil): Rail Voltage Generator.

Controller: Zentrale Kontrolle aller Einheiten.

**Patentansprüche**

1. Betriebsverfahren für den akustischen Resonanzbetrieb von Metallhalogenidlampen unter Benutzung einer hochfrequenten Trägerfrequenz, die mittels Sweepsignal frequenzmoduliert (FM) wird, und die gleichzeitig amplitudenmodullert (AM) wird, wobei zunächst eine Grundfrequenz des AM-Signals eingestellt wird, die vom i-ten, bevorzugt dem zweiten, longitudinalen Mode abgeleitet ist, **dadurch gekennzeichnet, dass** nach dem Zünden der Lampe und Abwarten einer Karenzzeit mindestens folgende Schritte in dieser Reihenfolge durchlaufen werden:

   a) Vorbereitungsschritt: bei ihm wird zunächst bei einem sehr niedrigen AM-Grad AMI von 5 bis 15 % eine erste Resonanz des Impedanzwertes Z, also ZEXT1, theoretisch oder experimentell **dadurch** bestimmt, dass ein großes Frequenzintervall für f(AM) abgefahren wird, das mit Sicherheit das Extremum beinhaltet, wobei dessen Endpunkte als FM1 (oberer Endpunkt des Frequenzintervalls) und FM2 (unterer Endpunkt des Frequenzintervalls) bezeichnet werden; der zu ZEXT1 zugehörige Frequenzpunkt FM1 wird zur Festlegung eines Messintervalls MI herangezogen, das eine Breite von 8 bis 25 kHz mit den Grenzpunkten ST (obere Grenzfrequenz) und SP (untere Grenzfrequenz) hat, und in dem FM1 so angeordnet ist, dass FM1 etwa bei 55 bis 80 %, bevorzugt 60 bis 70 %, der Entfernung zwischen SP und ST liegt, wobei FM1 immer näher bei ST liegen muss, wobei die Bedingung ST> FM1 > FM2 > SP gilt: ;
   b) Schritt 1: bei ihm wird das Messintervall MI wird durchfahren; es wird so ein Kennlinienfeld bestimmt, das erzeugt ist durch Abfahren verschiedener, stufenweise veränderter AM-Grade in einem maximalen Bereich AMI = 5 bis 45 %, insbesondere 10 bis 40 %, wobei jeweils das Messintervall MI immer von oben nach unten, also von ST nach SP, abgefahren wird;
   c) Schritt 2: aus dem Kennlinienfeld abgeleitete Bestimmung des optimalen AM-Grads AMI = AMopt durch Vergleich der Änderung der Lampenimpedanz als Funktion der Frequenz bei den verschiedenen AM-Graden, indem die Verschiebungsrate der Funktion FM2(AM) der stufenweise veränderten AM-Grade bestimmt wird; dabei ergibt sich beim Übergang von der Ausbildung eines einzigen Impedanzextremums zu einer größeren Zahl von gleichartigen Impedanzextrems eine verstärkte Verchiebung der Ferquenz FM2 mit dem AM-Grad; Bestimmung des Maximums der Vestärkten Verchiebung der Lampenimpedanz und Bestimmung des zugehörigen Werts von AMI = AMmd; Festlegung von AMopt durch die Vorschrift AMopt = AMmd + W mit W = 3 bis 10 %;
   d) Schritt 3: Aufsuchen der zu AMopt zugehörigen Frequenz FMmin;
   e) Schritt 4: Festlegung der Betriebsfrequenz FMopt, indem das Frequenzintervall OPT zwischen FMmin und einem Wert, der 20 % von FM2 entfernt im Intervall zwischen FMmin und FM2 liegt, überfahren wird.

2. Betriebsverfahren nach Anspruch 1, **dadurch gekennzeichnet, dass** die Frequenz des Sweepsignals (Sweepfrequenz) von den ersten azimutalen und radialen Modi abgeleitet wird.

3. Betriebsverfahren nach Anspruch 2, **dadurch gekennzeichnet, dass** die Sweepfrequenz im Betrieb konstant gehalten wird und dass sie aus dem Bereich zwischen dem ersten azimutalen und radialen Mode ausgewählt wird.

4. Betriebsverfahren nach Anspruch 1, **dadurch gekennzeichnet, dass** die Karenzzeit etwa 30 bis 80 sec dauert.

5. Betriebsverfahren nach Anspruch 1, **dadurch gekennzeichnet, dass** der Vorbereitungsschritt mindestens ein einziges Mal durchfahren wird.

6. Betriebsverfahren nach Anspruch 1, **dadurch gekennzeichnet, dass** der Schritt 3 bei jedem Start der Lampe durchfahren wird.

7. Betriebsverfahren nach Anspruch 1, **dadurch gekennzeichnet, dass** die mittlere konstante Rate der Frequenzänderung der Amplitudenmodulationsfrequenz bei Durchfahren der AM-Frequenz zwischen 0,05 kHz pro Sekunde und 1 kHz pro Sekunde liegt,

8. Betriebsverfahren nach Anspruch 1, **dadurch gekennzeichnet, dass** beim Schritt 1 mindestens 6 und höchstens 15 Verläufe der Lampenimpedanz durchfahren werden

9. Betriebsverfahren nach Anspruch 1, **dadurch gekennzeichnet, dass** die Betriebsfrequenz FMopt konstant pro Lampenstart gewählt wird.

10. Betriebsverfahren nach Anspruch 1, **dadurch gekennzeichnet, dass** die Betriebsfrequenz FMopt durch Abfahren einer Reihe von Einzelfrequenzen aus dem Intervall OPT realisiert wird.

11. Betriebsverfahren nach Anspruch 1, **dadurch gekennzeichnet, dass** der AM-Grad im Bereich 10 bis 37 % eingestellt wird.

12. EVG zum hochfrequenten Betrieb einer Hochdruckentladungslampe, mit einem Sweepsignalgenerator, einem Amplitudensignalgenerator, einem Mischer für beide Generatoren, einem Messteil, der die Ausgangsspannung und den Ausgangsstrom misst, und der fähig ist, die Messwerte über A/D-Wandlung und über Controllersteuerung in einen überschreibbaren Speicherbaustein abzuspeichern, und mit einem Controller zum genauen Regeln der Grundfrequenz des Amplitudenmodulationssignals und des Amplitudenmodulationsindex, **dadurch gekennzeichnet, dass** die Generatoren ausgelegt sind, Im Betrieb der Lampe die Schritte Vorbereitungsschritt, Schritt 1, Schritt 2, Schritt 3 und Schritt 4 nach Anspruch 1 durchzuführen.

13. **EVG** nach Anspruch 12, **dadurch gekennzeichnet, dass** die einzelnen Schritte einzeln abrufbar sind.

14. System aus EVG gemäß Anspruch 12 und einer damit betreibbaren Hochdruckentladungslampe mit einem Entladungsgefäß, das Metallhalogenide enthält, **dadurch gekennzeichnet, dass** das Entladungsgefäß einen zugeordneten Innendurchmesser ID und eine zugeordnete Innenlänge IL besitzt, wobei das Aspektverhältnis des Entladungsgefäßes mindestens 1,5 ist.

**Claims**

1. Operating method for acoustic resonant operation of metal halide lamps using a radio frequency carrier frequency which is frequency-modulated (FM) by means of a sweep signal and which is amplitude-modulated (AM) at the same time, with a fundamental frequency first of all being set for the AM signal, which is derived from the i-th, preferably the second, longitudinal mode, **characterized in that** at least the following steps are carried out in this order, after starting of the lamp and after waiting for a stabilization time:

   a) Preparation step: during this step, a first resonance of the impedance value Z, that is to say ZEXT 1, is first of all determined theoretically or experimentally during this step with a very low AM level AMI of 5 to 15% in such a way that a large frequency interval is covered for f(AM) which will certainly include the extreme, wherein the end points of the frequency interval are designated FM1 (upper end point of the frequency interval) and FM2 (lower end point of the frequency interval); the frequency point FM1 associated with ZEXT 1 is used to define a measurement interval MI which has a width of 8 to 25 kHz with the cut-off points ST (upper cut-off frequency) and SP (lower cut-off frequency), and in which FM1 is arranged such that FM1 is located at approximately 55 to 80%, preferably 60 to 70%, of the interval between SP and ST, where FM1 must always be closer to ST, wherein the condition ST > FM1 > FM2 > SP is satisfied;
   b) Step 1: the measurement interval MI is passed through during this step; a family of characteristics is thus determined which is produced by passing through different AM levels, which are changed in steps, in a maximum range AMI = 5 to 45%, in particular 10 to 40%, with the measurement interval MI in each case always being passed through from top to bottom, that is to say from ST to SP;
   c) Step 2: determination derived from the family of characteristics, of the optimum AM level AMI = AMopt by comparison of the change in the lamp impedance as a function of the frequency for the various AM levels **in that** the rate of change of the AM levels, which vary in steps, is determined; in this case, there is an increased shift in the frequency FM2 with the AM level when a change is made from the formation of a single impedance extreme to a greater number of impedance extremes of the same type; determination of the maximum of the increased shift in the lamp impedance and determination of the associated value of AMI - AMmd; definition of AMopt by the rule AMopt = AMmd + W where W = 3 to 10%; d) Step 3: Search for the frequency FMmin associated with AMopt;
   e) Step 4: definition of the operating frequency FMopt by passing through the frequency interval OPT between FMmin and a value which is 20% of FM2 away in the interval between FMmin and FM2.

2. Operating method according to Claim 1, **characterized in that** the frequency of the sweep signal (sweep frequency) is derived from the first azimuth and radial modes.

3.  Operating method according to Claim 2, **characterized in that** the sweep frequency is kept constant during operation, and **in that** it is selected from the range between the first azimuth and radial mode.

4.  Operating method according to Claim 1, **characterized in that** the stabilization time lasts for about 30 to 80 seconds.

5.  Operating method according to Claim 1, **characterized in that** the preparation step is carried out at least once.

6.  Operating method according to Claim 1, **characterized in that** step 3 is carried out whenever the lamp is started.

7.  Operating method according to Claim 1, **characterized in that** the mean constant rate by which the frequency of the amplitude-modulation frequency is varied when passing through the AM frequency is between 0.05 kHz per second and 1 kHz per second.

8.  Operating method according to Claim 1, **characterized in that** at least 6 and at most 15 profiles of the lamp impedance are passed through in step 1.

9.  Operating method according to Claim 1, **characterized in that** the operating frequency FMopt is selected to be constant whenever the lamp is started.

10. Operating method according to Claim 1, **characterized in that** the operating frequency FMopt is obtained from the OPT interval by passing through a range of individual frequencies.

11. Operating method according to Claim 1, **characterized in that** the AM level is set in the range from 10 to 37%.

12. Electronic ballast for radio frequency operation of a high-pressure discharge lamp, having a sweep signal generator, an amplitude signal generator, a mixer for the two generators, a measurement part, which measures the output voltage and the output current and has the capability to store the measured values via A/D conversion and via controller control in a memory module which can be overwritten, and having a controller for accurate regulation of the fundamental frequency of the amplitude modulation signal and of the amplitude modulation index, **characterized in that** the generators are designed to carry out the steps comprising the preparation step, Step 1, Step 2, Step 3 and Step 4 during operation of the lamp according to Claim 1.

13. Electronic ballast according to Claim 12, **characterized in that** the individual steps can be called up individually.

14. System comprising an electronic ballast according to Claim 12 and a high-pressure discharge lamp which can be operated using said system, having a discharge vessel which contains metal halides, **characterized in that** the discharge vessel has an associated internal diameter ID and an associated internal length IL, with the aspect ratio of the discharge vessel being at least 1.5.

**Revendications**

1.  Procédé pour faire fonctionner en résonance acoustique des lampes à halogénure métallique en utilisant une fréquence porteuse de haute fréquence, qui est modulée en fréquence ( FM ) au moyen d'un signal sweep et qui est modulée simultanément en amplitude ( AM ), en établissant d'abord une fréquence fondamentale du signal ( AM ) qui est dérivée du iième, de préférence du deuxième, mode longitudinal, **caractérisé en ce qu'**après l'amorçage de la lampe et après écoulement d'une durée de carence, on effectue au moins les stades suivants dans cet ordre :

    a) stade de préparation : on y détermine théoriquement ou expérimentalement d'abord, pour un degré d'AM AMI très petit de 5 à 15%, une première résonance de la valeur Z d'impédance, donc ZEXT1, en parcourant un grand intervalle de fréquence pour f ( AM ), qui contient certainement l'extremum, dont les points finaux sont désignés par FM1 ( point final supérieur de l'intervalle de fréquence ) et FM2 ( point final inférieur de l'intervalle de fréquence ) ; on tire parti du point FM1 de fréquence associé à ZEXT1 pour fixer un intervalle MI de mesure, qui a une largeur de 8 à 25 kHz en ayant les points limites ST ( fréquence limite supérieure ) et SP ( fréquence limite inférieure ) et dans lequel FM1 est disposé de manière à ce que FM1 se trouve à peu près de 55 à 80% de préférence, de 60 à 70%, de la distance entre SP et ST, FM1 devant toujours se trouver plus près de ST, la condition ST > FM1 > FM2 > SP étant satisfaite ;

b) stade 1 : on y parcourt l'intervalle M1 de mesure ; on détermine ainsi une famille de caractéristiques qui est produite en parcourant divers degrés AM, modifiés pas à pas, dans une plage AMI maximum = 5 à 45%, notamment 10 à 40%, chaque intervalle MI de mesure étant parcouru toujours de haut en bas, donc de ST vers SP ;

c) stade 2 : détermination déduite de la famille de caractéristiques de degré AM optimum AMI = AMopt par comparaison de la variation de l'impédance de la lampe en fonction de la fréquence aux divers degré AM, en déterminant le taux de décalage de la fonction FM2 ( AM ) des degrés AM modifiés pas à pas ; on obtient ainsi lors du passage de la formation d'un extremum d'impédance unique à un nombre plus grand d' extrema d'impédance de même type, un décalage amplifié de la fréquence FM2 avec le degré AM ; détermination du maximum du décalage amplifié de l'impédance de la lampe et détermination de la valeur associée de AMI = AMmd ; fixation de AMopt par la prescription AMopt = AMmd + W avec W = 3 à 10% ;

d) stade 3 : recherche de la fréquence FMmin associée à AMopt ;

e) stade 4 : fixation de la fréquence FMopt de fonctionnement en parcourant l'intervalle OPT de fréquence entre FMmin et une valeur qui se trouve éloignée de 20% de FM2 dans l'intervalle entre FMmim et FM2.

2. Procédé suivant la revendication 1, **caractérisé en ce que** l'on déduit la fréquence du signal sweep ( fréquence sweep ) des premiers modes azimutaux et radiaux.

3. Procédé suivant la revendication 2, **caractérisé en ce que** l'on maintient constante en fonctionnement la fréquence sweep et **en ce que** on l'a choisie dans la plage comprise entre le premier mode azimutal et le premier mode radial.

4. Procédé suivant la revendication 1, **caractérisé en ce que** la durée de carence est d'environ 30 à 60 secondes.

5. Procédé suivant la revendication 1, **caractérisé en ce que** l'on effectue le stade de préparation au moins une seule fois.

6. Procédé suivant la revendication 1, **caractérisé en ce que** l'on effectue le stade 3 à chaque amorçage de la lampe.

7. Procédé suivant la revendication 1, **caractérisé en ce que** le taux constant moyen de variation de la fréquence de modulation en amplitude, lorsque l'on parcourt la fréquence AM, est compris entre 0,05 kHz à la seconde et 1 kHz à la seconde.

8. Procédé suivant la revendication 2, **caractérisé en ce qu'**au stade 1 on parcourt au moins 6 et au plus 15 variations de l'impédance de la lampe.

9. Procédé suivant la revendication 1, **caractérisé en ce que** l'on choisit la fréquence FMopt de fonctionnement constante par amorçage de la lampe.

10. Procédé suivant la revendication 1, **caractérisé en ce que** l'on réalise la fréquence FMopt de fonctionnement en parcourant une série de fréquences individuelles dans l'intervalle OPT.

11. Procédé suivant la revendication 12, **caractérisé en ce que** l'on règle le degré AM dans la plage de 10 à 37%.

12. Ballast pour le fonctionnement en haute fréquence d'une lampe à décharge à haute fréquence, comprenant un générateur de signal sweep, un générateur de signal d'amplitude, un mélangeur des deux générateurs, une partie de mesure qui mesure la tension de sortie et le courant de sortie et qui est apte à mémoriser des valeurs de mesure, par une conversion analogique/numérique et par une commande, dans un module de mémoire qui peut être écrasé, et comprenant un dispositif de commande pour réguler avec précision la fréquence fondamentale du signal de modulation en amplitude et de l'indice de modulation d'amplitude, **caractérisé en ce que** les générateurs sont conçus pour effectuer lors du fonctionnement de la lampe les stades, stade de préparation, stade 1, stade 2, stade 3 et stade 4 suivant la revendication 1.

13. Ballast suivant la revendication 12, **caractérisé en ce que** les divers stades peuvent être appelés individuellement.

14. Système composé d'un ballast suivant la revendication 12 et d'une lampe à décharge à haute pression pouvant ainsi fonctionner, comprenant une enceinte de décharge qui contient des halogénures métalliques, **caractérisé en**

**ce que** l'enceinte de décharge à un diamètre ID intérieur associé et une longueur IL intérieure associée, le rapport d'aspect de l'enceinte de décharge étant d'au moins 1,5.

FIG 1

FIG 2

FIG 3A

FIG 3B

FIG 3C

FIG 4

FIG 5

FIG 6

Start

**Vorschritt:**

Bestimmung von FM1 aus Gorbscan-Vorgang mit AMI von ca. 5-10%.
des gefundenen Frequenzpunktes mit AMI = 7-10% auf 60-80% des Intervallbereiches [ST,SP].

**Schritt1:**

Messung und Speichern von ZI(fAM) bzw. Berechnung von Z(fAM) (Relativverlauf)
für fAM-Scan von ST nach SP für AMI von ca. 8-40% mit 0.05 kHz/sec –0.5kHz/sec

**Schritt2:**

Bestimmung des optimalen AM-Grades AMopt aus der Verschiebungsrate von FM2 d FM2/d AMI

**Schritt3:**

Bestimmung von FMmin und Anfahren von FMmin von ST aus

**Schritt4:**

Bestimmung von FMopt durch Überfahren von Frequenzintervall [FMnin,FMmin-4/5*(FMmin-FM2)]

FIG 7A

Vorschritt: Festlegung
Von ST und SP

Start

Setze AMI = 10%

Setze Startfrequenz für Grobscan 10 kHz unterhalb der unteren Sweepfrequenz
→ fAMstart,scan = fsweep,low – 10kHz

Messung der Lampenimpedanz ZI(fAM$_i$)

Speichern der Lampenimpedanz (fAM$_i$ ;ZI(fAM$_i$) )

Verringern von fAM um ΔfAM=200Hz
fAM$_{i+1}$ = fAM$_i$- ΔfAM

Messung der Lampenimpedanz ZI(fAM$_{i+1}$)

Wiederholung bis ZI(fAM$_{i-2}$), ZI(fAM$_{i-1}$) ,ZI(fAM$_i$), ZI(fAM$_{i+1}$), ZI(fAM$_{i+2}$)
Bilde gleitenden Mittelwert ZImean bis von 1 bis i (Anwendung für i>=5)
(1kHz Abstand vom Startpunkt))

Ist lokales Extremum
von ZI(fAM$_i$) mit ZI(fAM$_i$) >=1.02 ZImean oder =<0.98ZImean
erreicht?

nein

i =i+1

Ist lokales Extremum
von ZI(fAM$_i$) mit ZI(fAM$_i$)>=1.5 *ZImean oder =<0.95*ZImean

ja

Verringere AMI um 1%
zu AMI_start

ja

nein

Setze ST = fAM$_i$ + 3kHz und SP= fAM$_i$ –7 kHz

Stop

FIG 7B

EP 1 560 473 B1

# Schritt1: Bestimmung von Z(fAM) von ST bis SP

Vorschritt → Start

Setze $AMI_1$ = AMI_start (typ.10%), AMI_stop = 35% AMI_step = 2.5%(typ.1-5%)

fAM = ST, fAM_step = -(50-200Hz), (typ.100Hz)

Messung von ZI(fAM )

Speichern von (fAM$_i$, ZI(fAM$_i$))

$fAM_{i+1}$ = $fAM_i$ + fAM_step

Wiederhole bis $fAM_i$ = SP oder
Bis | ZI(fAM$_i$) - ZI(ST) | <= 0.02 ZI(ST)

AMI = AM_stop?  — nein →

Setze $AMI_{k+1}$ =
$AMI_k$ +AMI_step

ja

# Schritt2: Bestimmung AMIopt

Bestimme FM2(AMI$_k$)

Bestimme Verschiebungsrate ΔFM2/ΔAMI

Bestimme AMI_max_min für FM2 unterhalb maximaler Verschiebungsrate ΔFM2/ΔAMI von FM2

Bestimme AMIopt = AMI_max_min + 5-10% (typ.10%)

## FIG 7C

EP 1 560 473 B1

# Schritt3: Anfahren von FMmin bei AMIopt

```
                    ┌──────────┐
                    │ Schritt2 │
                    └────┬─────┘
                         ▼
                    ┌────────┐
                    │ Start  │
                    └────┬───┘
                         ▼
   ┌─────────────────────────────────────────────┐
   │ Bestimme FMmin für AMIopt:                   │
   │ Minimum zwischen FM2 und FM1                 │
   │ Oder                                         │
   │ 1.      Nullstelle von dZ(fAM)/dfAM für fAM> FM2 │
   │ Falls Plateaubildung vorliegt               │
   └─────────────────────┬───────────────────────┘
                         ▼
   ┌─────────────────────────────────────────────────────┐
   │ fAM_start = ST fAMstep= 50-250Hz Scan_Rate = 0.05...0.5kHz/sec │
   └─────────────────────┬───────────────────────────────┘
                         ▼
              ┌─────────────────────┐
              │ fAMi=fAMi + fAMstep │◄──────────┐
              └──────────┬──────────┘           │
                         ▼                       │
              ┌─────────────────┐     nein       │
              │  fAM = FMmin?   │────────────────┘
              └────────┬────────┘
                       ▼  ja
              ┌─────────────────┐
              │ FMmin erreicht. │
              └─────────────────┘
```

FIG 7D

# Schritt4: Anfahren von FMopt

```
        ┌──────────┐
        │ Schritt3 │
        └────┬─────┘
             ↓
          ┌───────┐
          │ Start │
          └───┬───┘
              ↓
┌─────────────────────────────────────────────────┐
│ Bestimme FMmin,op = FMmin-4/5(FMmin –FM2)        │
│ fAMstep= 10-150Hz Scan_Rate = 0.001...0.5kHz/sec │
└─────────────────────┬───────────────────────────┘
                      ↓
┌───────────────────────────────────────────────┐
│ Fahre fAM mit fAMstep in Richtung FMmin,op     │
└───────────────────┬───────────────────────────┘
                    ↓
┌──────────────────────────────────────────────────────────────────────┐
│ FMopt angenähert: fAM <= FMmin - r *(FMmin –FM2)  0<= r <= 0.75;       │
│ typ.: r = 0.1..0.5                                                     │
└───────────────────────┬──────────────────────────────────────────────┘
                        ↓
                   ┌──────┐
                   │ Stop │
                   └──────┘
```

FIG 7E

EP 1 560 473 B1

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6400100 B
- WO 0209480 A